# EUROPEAN PATENT APPLICATION

(11) **EP 2 088 495 A2**
(43) Date of publication of application: **12.08.2009**
(21) Application number: 09000878.0
(22) Date of filing: 22.01.2009
(51) Int. Cl.: G06F 1/26, G06F 1/32, B60R 16/02

(54) **Electronic control system with controllers and power supply unit**

(30) Priority: 29.01.2008 JP 2008017589
(71) Applicant: DENSO CORPORATION, Kariya-city, Aichi-pref. 448-8661 (JP)
(72) Inventor: Kobayashi, Toshimasa, Kariya-city Aichi-pref., 448-8661 (JP); Kanayama, Mitsuhiro, Kariya-city Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

An electronic control unit has a primary microcomputer producing a supply control signal or a cutoff control signal, a secondary microcomputer, and a power supply unit receiving the signal from the primary microcomputer through a signal line. Each signal has a level changing with time. The supply unit detects a level change of the signal line as a line transmission signal and performs pattern judgment for the level pattern of the line transmission signal. When the level pattern of the line transmission signal matches with a registered pattern of one control signal, the supply unit starts supplying or cuts off electric power to the secondary microcomputer. In response to the level pattern of the line transmission signal different from a registered pattern of any control signal, the supply unit invalidates the level change of the signal line to continue the power supply or cutoff.

## Description

### CROSS-REFERENCE TO RELATED APPLICATION

This application is based upon and claims the benefit of priority of the prior Japanese Patent Application 2008-17589 filed on January 29, 2008, so that the contents of which are incorporated herein by reference.

### BACKGROUND OF THE INVENTION

### Field of the Invention

The present invention relates to an electronic control system wherein a primary controller controls a power supply unit to repeatedly supply and cutoff electric power to a secondary controller.

### Description of Related Art

An electronic control unit (hereinafter, called ECU) is mounted in a vehicle to control devices of the vehicle. The ECU has both a power supply unit and a microcomputer. The power supply unit drops the battery voltage of a battery to a predetermined supply voltage and supplies electric power of the supply voltage to the microcomputer set in a normal operation mode. The microcomputer performs various operations while consuming the electric power and controls devices of the vehicle. When the microcomputer is set in a sleep mode, the supply of the power to the microcomputer is stopped, and the microcomputer is not operated. Therefore, the electric power consumed in the ECU can be reduced.

The ECU has been recently required to have high performance, so that an ECU having a plurality of microcomputers has been used in recent years. In this type of ECU, it is important to efficiently reduce electric power consumed in the microcomputers. This ECU is, for example, disclosed in Published Japanese Patent First Publication No. 2007-213137. In this Publication, an ECUhas a primary control microcomputer, a secondary control microcomputer and a power supply unit. When judging that a predetermined stop condition is satisfied, the primary control microcomputer sends a stop signal to the supply unit. In response to this stop signal, the supplyunit stops the supply of electric power to the secondary control microcomputer, and the secondary control microcomputer is set to a sleep mode to perform no operation.

Generally, each microcomputer of the ECU has a specific circuit which receives electric current in the normal operation mode but does not receive any current during the stoppage of the power supply. When a signal set at a high level is transmitted by mistake from a microcomputer still operated to a microcomputer not operated due to the stoppage of the power supply, electric current based on the signal sometimes flows through the specific circuit of the microcomputer not operated. In this case, the standby power consumed in the microcomputer not operated is increased, or an electric element of the microcomputer not operated is sometimes damaged or broken.

The ECU disclosed in the Publication is designed to prevent the flow of current through the specific circuit of the secondary control microcomputer. More specifically, the primary control microcomputer is set in a specific state to prevent a high-level signal from being output to the secondary control microcomputer, and outputs the stop signal to the supply unit.

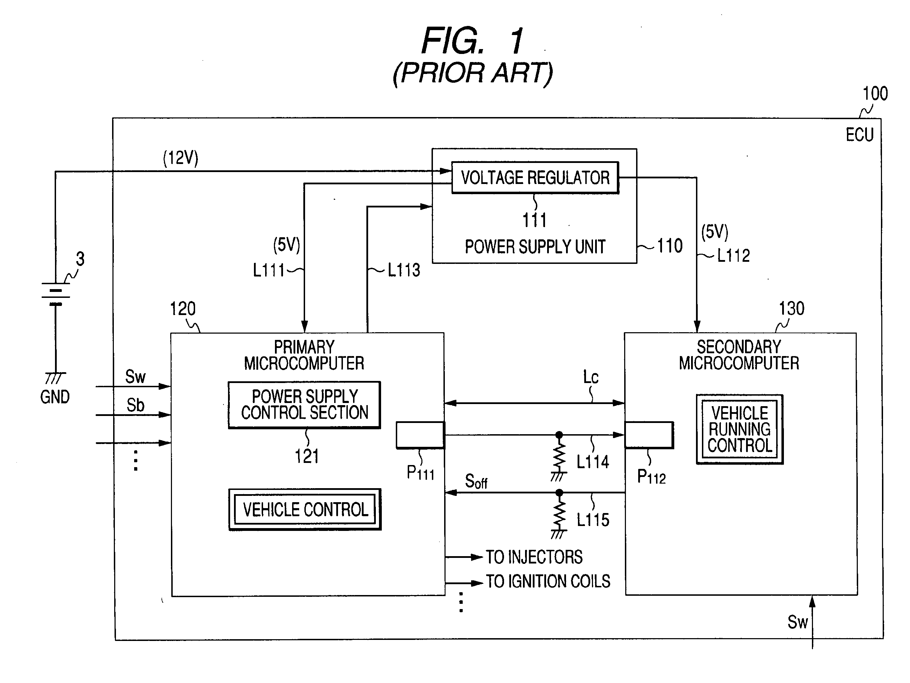

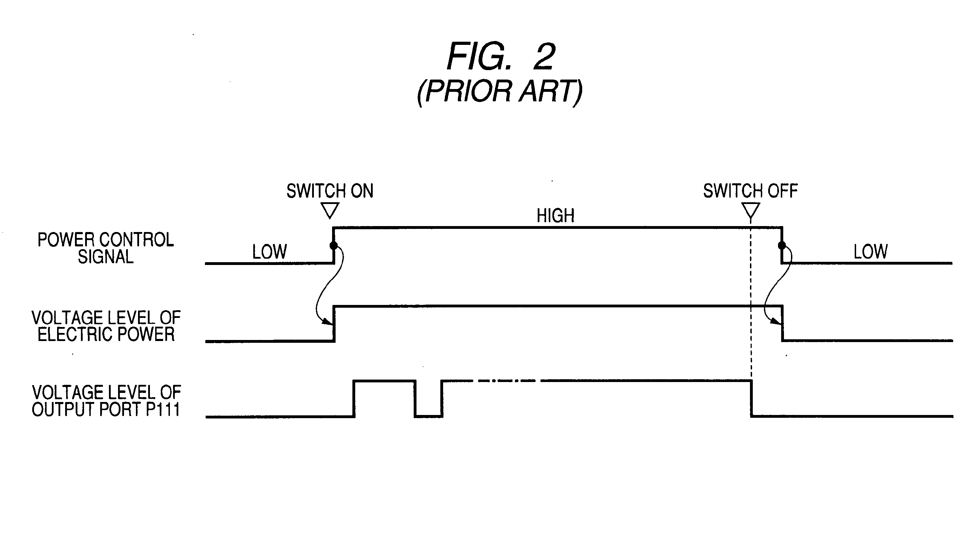

The structure and operation of the ECU disclosed in the Publication are described in more detail with reference to Fig. 1 and Fig. 2. Fig. 1 is a schematic view showing the structure of an ECU 100. The ECU 100 is mounted on a vehicle to control devices of the vehicle such as an engine, a transmission and the like.

The ECU 100 has a primary control microcomputer 120 forperformingvarious operations to control devices, a secondary control microcomputer 130 for performing various operations to control devices relating to the running of the vehicle, and a power supply unit 110 for supplying electric power of a supply voltage to the microcomputers 120 and 130. The primary microcomputer 120 receives various signals such as a switch signal Sw indicating the on-state or off-state of an ignition switch (not shown), a brake signal Sb and the like. The primary microcomputer 120 is immediately woken up in response to a wake-up request received from the outside of the ECU 100 and mainly performs vehicle control to control devices such as injectors, ignition coils and the like. The secondary microcomputer 130 receives the switch signal Sw of the ignition switch. The secondary microcomputer 130 is operated during the on-state of the ignition switch and mainly performs vehicle running control to control devices relating to the vehicle running.

The supply unit 110 has a voltage regulator 111 for dropping the battery voltage V1 (e.g., 12V) of an on-vehicle battery 3 to a supply voltage (e.g., 5V). The regulator 111 supplies electric power of the supply voltage to the microcomputers 120 and 130 through respective power supply lines L111 and L112.

The microcomputers 120 and 130 communicate with each other through a communication line Lc. The primary microcomputer 120 outputs a power control signal set at the high or low level to the supply unit 110 through a control signal line L113. In response to this control signal, the supply unit 110 stops or restarts the supply of electric power to the secondary microcomputer 130.

These supply and stop of electric power to the secondarymicrocomputer 130 will be described in detail. When the secondary microcomputer 130 judges based on the switch signal Sw of the ignition switch that the ignition switch is turned off to be set in the off state, the microcomputer 130 decides to stop its operation and outputs an off enabling signal Soff to the primary microcomputer 120. The off enabling signal indicates permission to stop electric power supplied to the microcomputer 130. The primary microcomputer 120 judges based on the switch signal Sw of the ignition switch that the ignition switch is set to the off state, and successively outputs power control signals fixed to the low level to the supply unit 110 in response to the off enabling signal. In response to this power control signal, the supply unit 110 stops the supply of electric power to the secondary microcomputer 130.

Thereafter, when the primary microcomputer 120 judges according to the switch signal Sw of the ignition switch that the ignition switch has just been switched on, the primary microcomputer 120 successively outputs power control signals fixed to the high level to the supplyunit 110 . In response to this power control signal, the supply unit 110 starts supplying electric power to the secondary microcomputer 130. A power supply control section 121 of the microcomputer 120 controls the output of the power control signal fixed to the low level and the power control signal fixed to the high level.

Before outputting the power control signal fixed to the low level, the primary microcomputer 120 sets a signal level of an output port P111, connected with an input port P112 of the secondary microcomputer 130 through a signal line L114, to the low level. Therefore, although electric current based on a high-level signal at the output port of the microcomputer 120 can flow through a specific circuit of the microcomputer 130 normally operated, the microcomputer 120 prevents any current based on a high-level signal at the output port from flowing through the specific circuit of the microcomputer 130 not receiving electric power from the supply unit 110.

Fig. 2 is a timing chart of the power control signal, the voltage level of electric power supplied to the microcomputer 130 and a signal level at the output port P111 of the microcomputer 120 in the ECU 100.

In the example shown in Fig. 2, when the ignition switch is switched on to change the switch signal Sw to the high level, the primary microcomputer 120 judges that a wake-up condition is satisfied, and outputs a power control signal fixed to the high level to the supply unit 110. The supply unit 110 supplies electric power to the secondary microcomputer 130, so that the voltage level of the electric power supplied to the microcomputer 130 is increased. Therefore, the microcomputer 130 starts the running control for the devices. During the operation of the microcomputer 130, the microcomputer 120 repeatedly raises and lowers the signal level at the output port P111.

Thereafter, when the ignition switch is switched off, the primary microcomputer 120 receives an off enabling signal Soff from the secondary microcomputer 130 though a signal line L115. Therefore, the primary microcomputer 120 judges that an operation stop condition of the microcomputer 130 is satisfied, and the microcomputer 120 fixes or locks the signal level of the output port P111 to the low level. Then, the microcomputer 120 outputs a power control signal fixed to the low level to the supply unit 110. The supply unit 110 stops the supply of electric power to the secondary microcomputer 130, so that the voltage level of electric power supplied to the microcomputer 130 is lowered.

However, there is a probability that a malfunction occurs in the primary microcomputer 120 during the operations of the microcomputers 120 and 130. At this time, even when the microcomputer 120 actually detects the on-state of the ignition switch, the microcomputer 120 sometimes outputs a power control signal set at the low level signal to the supply unit 110 by mistake. Further, even when the microcomputer 120 outputs a power control signal fixed to the high level, noise sometimes changes this signal to the low level. In this case, the supply unit 110 undesirably receives a power control signal set at the low level due to the malfunction or noise for a short time, so that the supply unit 110 misjudges from the received power control signal.

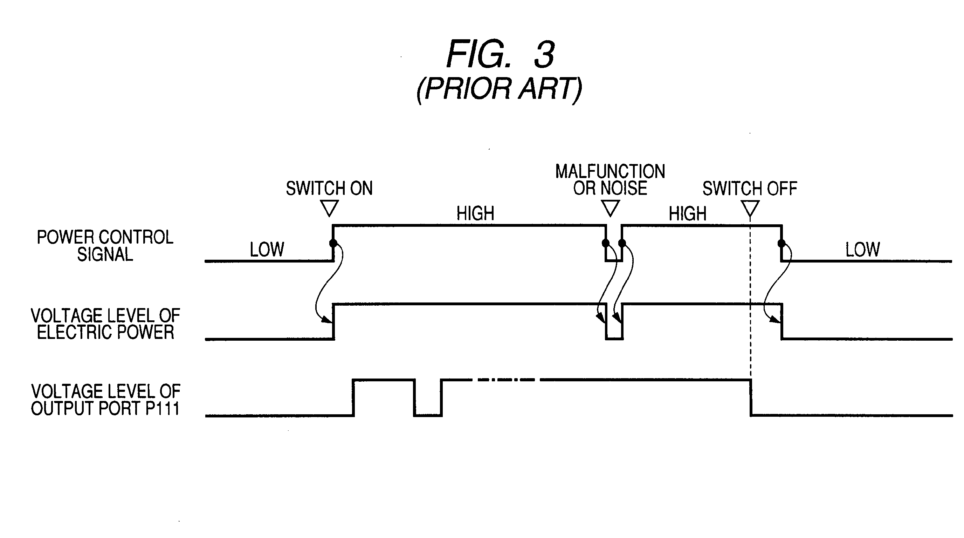

Fig. 3 is a timing chart of a power control signal, the voltage level of electric power and a signal level of the output port P111 in the ECU 100 when the power control signal is changed from the high level to the low level for a short time due to a malfunction of the microcomputer 120 or noise.

As shown in Fig . 3, when the supply unit 110 receives a power control signal changed to the low level due to a malfunction of the microcomputer 120 or noise during the operation of the microcomputer 130, the supply unit 110 stops the supply of electric power to the microcomputer 130 in response to the power control signal, and the operation of the secondarymicrocomputer 130 is stopped while the output port P111 of the microcomputer 120 is set at the high level. In this case, electric current based on a high-level signal outputted from the output port P111 of the microcomputer 120 sometimes flows through the specific circuit of the microcomputer 130 not operated. Therefore, the standby power consumed in the microcomputer 130 not operated is undesirably increased, or a failure or breakdown sometimes occurs in the microcomputer 130.

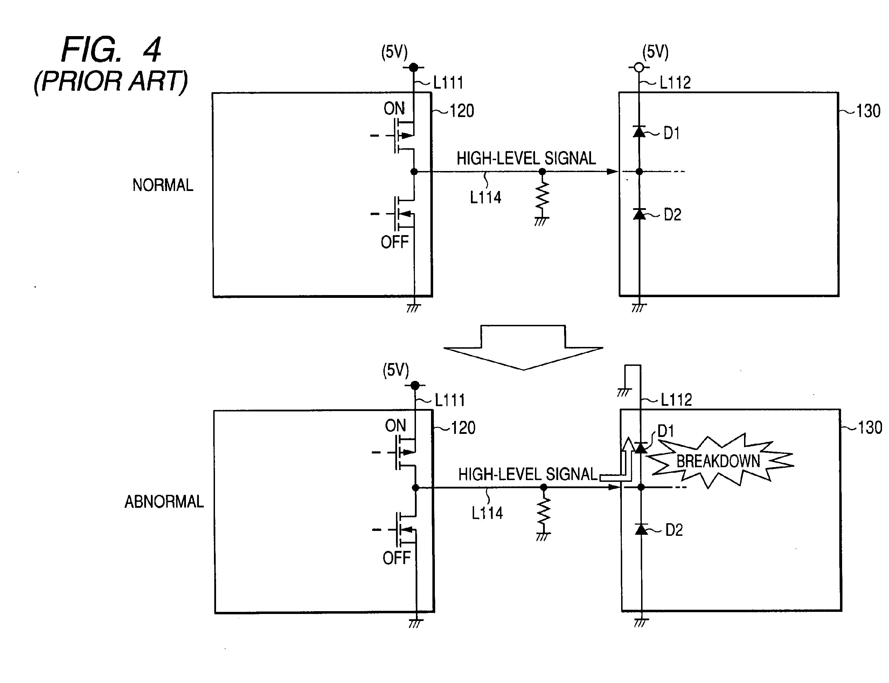

Fig. 4 is a view showing a failure or breakdown occurred in the microcomputer 130 due to current flowing into the microcomputer 130 not operated.

For example, as shown in Fig. 4, the secondary microcomputer 130 has two diodes D1 and D2 at the input port P112 connected with the output port P111 of the microcomputer 120 through a signal line. The diodes D1 and D2 protect the microcomputer 130 from a signal transmitted through the signal line during the operation of the microcomputer 130. When the microcomputer 130 receives electric power from the supply unit 110 (normal condition), the cathode of the diode D1 is set at the high level. Therefore, any high-level signal of the microcomputer 120 cannot flow through the diode D1. In contrast, when the supply unit 110 stops the supply of electric power to the microcomputer 130 by mistake (abnormal condition), the cathode of the diode D1 is set at the low level. Therefore, when the microcomputer 120 outputs a high-level signal to the input port P112 of the microcomputer 130, a high voltage current based on this signal is applied to the diode D2, and electric current based on this signal flows through the diode D1. In this case, a failure sometimes occurs in the diode D1 or D2, and the input port P112 of the microcomputer 130 is also damaged or broken down.

### SUMMARY OF THE INVENTION

An object of the present invention is to provide, with due consideration to the drawbacks of the conventional electronic control unit, an electronic control system wherein a primary controller reliably controls a power supply unit to change the supply of electric power to a secondary controller to the cutoff of the electric power, or to change the cutoff of electric power to the secondary controller to the supply of the electric power, regardless of the occurrence of a malfunction in the primary controller or the power supply unit or noise superimposed onto a control signal transmitted from the primary controller to the power supply unit.

According to the aspect of this invention, the object is achieved by the provision of an electronic control unit comprising a primary controller that produces a power control signal, a secondary controller, and a power supply unit that supplies or cuts off electric power to the secondary controller when receiving the power control signal from the primary controller. The primary controller produces the power control signal, of which a level is changed with time in a specific level pattern, and transmits the power control signal to the power supply unit through a signal line. The power supply unit holds a registered level pattern denoting a level changed with time, detects a line transmission signal from the signal line, judges whether or not a level pattern of the line transmission signal matches with the registered level pattern, and starts supplying the electric power to the secondary controller or cuts off the electric power supplied to the secondary controller in response to the level pattern of the line transmission signal matching with the registered level pattern.

With this structure of the electronic control unit, the primary controller transmits a power control signal to the power supply unit through the signal line, and the power supply unit detects a line transmission signal from the signal line. The level pattern of the line transmission signal in the signal line normally accords with the level pattern of the power control signal.

When the primary controller controls the power supply unit to supply or cut off electric power to the secondary controller, the primary controller produces a power control signal having a specific level pattern which accords with or matches with a registered level pattern held in the power supply unit. Therefore, when the power supply unit detects the line transmission signal from the signal line, the level pattern of the line transmission signal normally matches with the registered level pattern. Accordingly, the power supply unit can correctly start supplying the electric power to the secondary controller or cut off the electric power supplied to the secondary controller.

However, a malfunction of the primary controller or the power supply unit sometimes occurs, or noise is sometimes superimposed onto the line transmission signal of the signal line. In this case, the level of the power control signal intended to be produced by the primary controller is differentiated from the level of the line transmission signal detected and recognized by the power supply unit. Assuming that the primary controller is designed to output a supply control signal set at a constant first level not changing with time or a cutoff control signal set at a constant second level different from the first level to the power supply unit through a signal line as a power control signal, the power supply unit judges the level of the line transmission signal as the second level when the primary controller intends to output the supply control signal of the first level, or the power supply unit judges the level of the line transmission signal as the first level when the primary controller intends to output the cutoff control signal of the second level. As a result, the power supply unit starts supplying electric power to the secondary controller by mistake when the primary controller intends to control the power supply unit to cut off the electric power, or the power supply unit cuts off electric power to the secondary controller by mistake when the primary controller intends to control the power supply unit to supply the electric power.

In the present invention, each of the specific level pattern of the power control signal and the registered level pattern held in the power supply unit is a pattern of a level changed with time. Each of the specific level pattern and the registered level pattern is a significant level pattern which is intentionally, artificially, ingeniously and/or uniquely set to be easily distinguished from an abnormal level pattern caused by the malfunction or noise. Therefore, when a constant level of the signal line is changed due to the malfunction of the primary controller or the noise or when the power supply unit detects a change in the level of the line transmission signal from a constant level of the line transmission signal due to the malfunction of the power supply unit, the level pattern of the line transmission signal detected by the power supply unit is necessarily differentiated from the registered level pattern.

Therefore, when the primary controller does not intend to change the power supply to the power cutoff or to change the power cutoff to the power supply, the electronic control system can prevent the power supply unit from changing the power supply or cutoff due to the malfunction or the noise.

Accordingly, the electronic control system can reliably prevent the increase of a standby power consumed in the system or a failure of the secondary controller. Further, the electronic control system can prevent the secondary controller from unnecessarily starting the operation, and the unnecessary increase of electric power consumed in the system can be suppressed.

### BRIEF DESCRIPTION OF THE DRAWINGS

Fig. 1 is a schematic view showing the structure of a conventional ECU;
Fig. 2 is a timing chart of a power control signal, the voltage level of electric power supplied to a secondary microcomputer and a signal level of an output port of a primary microcomputer in the ECU shown in Fig. 1;
Fig. 3 is a timing chart of a power control signal, the voltage level of electric power supplied to a secondary microcomputer and a signal level of the output port in the ECU shown in Fig. 1 when the power control signal is changed to the low level by mistake due to the malfunction or noise;
Fig. 4 is a view showing a failure or breakdown occurring in the secondary microcomputer due to current flowing into the secondary microcomputer not operated;
Fig. 5 is a block diagram of an electronic control unit according to the first embodiment of the present invention;
Fig. 6 is a block diagram of a pattern recognition section of a power supply unit shown in Fig. 5;
Fig. 7 is a timing chart of a power control signal, a counted value and a voltage level of electric power supplied to a secondary microcomputer shown in Fig. 5;
Fig. 8 is a flow chart showing a mode transfer process performed in a secondary microcomputer shown in Fig. 5;
Fig. 9 is a f low chart showing a power cutoff control process performed in a primary microcomputer shown in Fig. 5;
Fig. 10 is a flow chart showing a power cutoff control operation for producing a cutoff control signal and outputting this signal from a primary microcomputer shown in Fig. 5;
Fig. 11 is a flow chart showing a power supply control process performed in a primary microcomputer shown in Fig. 5;
Fig. 12 is a flow chart showing the operation for producing a supply control signal and outputting the signal from a primary microcomputer shown in Fig. 5;
Fig. 13 is a flow chart of the pattern judgment and recognition performed in the pattern recognition section shown in Fig. 6;
Fig. 14 is a timing chart of the level of a power control signal, the level of electric power supplied to a secondary microcomputer, and a mode of the secondary microcomputer shown in Fig. 5 in an intermittent control operation;
Fig. 15 is a timing chart of a voltage level detected in a power supply unit shown in Fig. 5, the level of electric power and the signal level of an output port of a primary microcomputer shown in Fig. 5;
Fig. 16 is a block diagram of an electronic control unit according to the second embodiment of the present invention;
Fig. 17 is a flow chart showing the failure judging operation of a failure detecting unit shown in Fig. 16 according to the second embodiment;
Fig. 18 is a block diagram of an electronic control unit according to the third embodiment of the present invention;
Fig. 19 is a timing chart of the level of a power control signal, the level of electric power supplied to a secondary microcomputer, and a mode of the secondary microcomputer shown in Fig. 5 in a PWM control operation;
Fig. 20 is a block diagram of an electronic control unit according to the fourth embodiment of the present invention;
Fig. 21 is a flow chart showing the failure judging operation of a failure detecting unit shown in Fig. 20;
Fig. 22 is a block diagram of an electronic control unit according to the fifth embodiment of the present invention;
Fig. 23 is a block diagram of a pattern recognition section shown in Fig. 22;
Fig. 24 is a timing chart of a first power control signal, a second power control signal, a counted value, and the voltage level of electric power supplied to a secondary microcomputer shown in Fig. 23;
Fig. 25 is a block diagram of an electronic control unit according to the sixth embodiment of the present invention;
Fig. 26 is a timing chart of power control signals, voltage signals, a counted value and the voltage level of electric power supplied to a secondary microcomputer shown in Fig. 25;
Fig. 27 is a block diagram of a pattern recognition section shown in Fig. 25; and
Fig. 28 is a flow chart of the pattern judgment and recognition performed in the pattern recognition section shown in Fig. 27.

### DETAILED DESCRIPTION OF THE PREFERRED EMBODIMENTS

Embodiments of the present invention will now be described with reference to the accompanying drawings, in which like reference numerals indicate like parts, members or elements throughout the specification unless otherwise indicated.

### FIRST EMBODIMENT

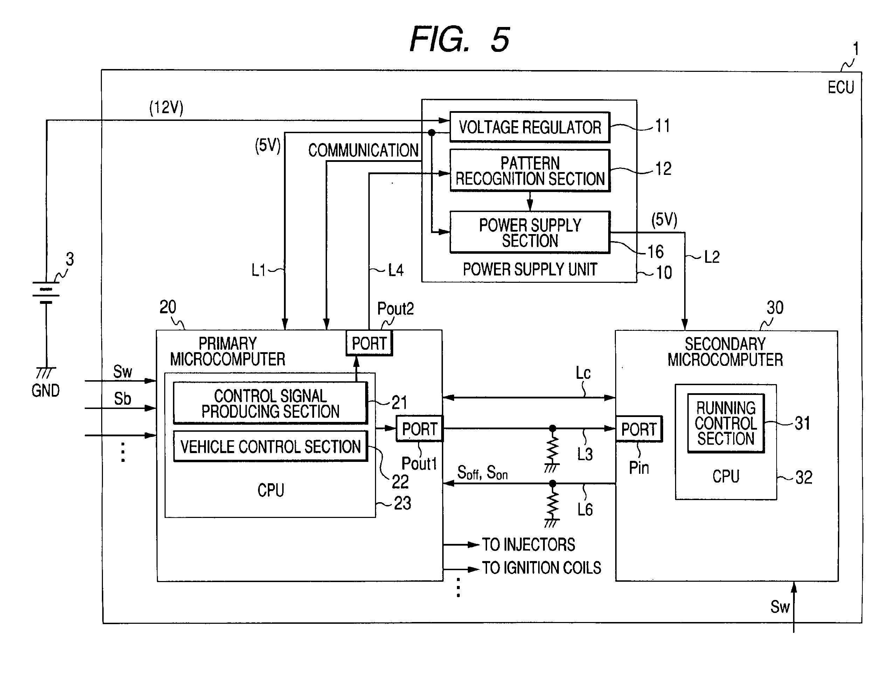

Fig. 5 is a block diagram of an electronic control unit 1 according to the first embodiment. The electronic control unit (ECU) 1 representing an electronic control system is mounted on a vehicle to control vehicle components such as the engine, transmission and the like. Further, ECUs according to other embodiments represent an electronic control system.

As shown in Fig. 5 , the ECU 1 has a power supply unit 10 for dropping the battery voltage (e.g., 12V) of an on-vehicle battery 3, representing an external power source, to a supply voltage (e. g. , 5V) in a voltage regulator 11, a primary microcomputer 20 (representing a primary controller) for always receiving electric power of the supply voltage from the power supply unit 10 through a first power receiving line L1, performing various operations in a vehicle control section 22 of a central processing unit (CPU) 23, while consuming the electric power, to control devices of the vehicle, and a secondary microcomputer 30 (representing a secondary controller) for receiving electric power of the supply voltage from the power supply unit 10 through a second power receiving line L2 when being set in the normal operation mode, performing various operations during the reception of the electric power in a running control section 31 of a CPU 32 to control devices relating to the running of the vehicle and substantially performing no operation when receiving no electric power.

The supply unit 10 always supplies electric power of the supply voltage to the microcomputer 20. The microcomputer 20 performs all operations of the primary microcomputer 120 shown in Fig. 1. The microcomputer 30 performs all operations of the secondary microcomputer 130 shown in Fig. 1. That is, the microcomputer 20 receives various signals such as a switch signal Sw, a brake signal Sb and the like. The microcomputer 20 is immediately woken up in response to a wake-up request received from the outside of this ECU 1 and mainly performs a vehicle control to control components such as injectors, ignition coils and the like. The microcomputers 20 and 30 communicate with each other through a communication line Lc.

The microcomputer 30 receives the switch signal Sw of the ignition switch. The microcomputer 30 has an input port Pin with diodes or the like, and these diodesprotectthemicrocomputer30againstahigh-level signal transmitted from an output port Pout1 of the microcomputer 20 through a first signal line L3 when the microcomputer 30 is operated. In contrast, when the microcomputer 30 does not receive electric power from the supply unit 10, the microcomputer 30 is easily damaged or broken down by the high-level signal.

Further, in this embodiment, a switch signal Sw is set at the high level when an ignition switch (not shown) is set in the on-state, while the switch signal Sw is set at the low level when the ignition switch is set in the off-state. The microcomputer 20 produces a power control signal Sc, of which the level is changed with time in a specific level pattern in a pattern period of time, in a control signal producing section 21 of the CPU 23 in response to the level change of the switch signal Sw to the high or low level. For example, the microcomputer 20 produces a supply control signal Sc1 set in a first specific pattern (or a power-on pattern) as a type of power control signal Sc in response to the level change of the switch signal Sw to the high level. The microcomputer 20 produces a cutoff control signal Sc2 set in a second specific pattern (or a power-off pattern) as another type of power control signal Sc in response to the level change of the switch signal Sw to the low level. The second specific pattern is differentiated from the first specific pattern. The microcomputer 20 outputs the control signal Sc to the supply unit 10 through a signal line L4 during the pattern period of time. This control signal is, for example, composed of a plurality of bits set at high or low levels .

The supply unit 10 monitors the voltage level of the signal line L4 and detects a change of the voltage level as a line transmission signal of the signal line L4. When the voltage level changing pattern of the line transmission signal matches with or is identical with the first or second specific pattern of the control signal, the supply unit 10 acknowledges that the supply unit 10 receives the supply or cutoff control signal Sc from the microcomputer 20. Therefore, the supply unit 10 starts supplying or cuts off electric power of the supply voltage to the microcomputer 30.

The operation of the ECU1 will be brieflydescribed. When the ignition switch is switched on by the driver of the vehicle, the switch signal Sw is changed to the high level. In response to this level change, the microcomputer 20 judges that a wake-up condition is satisfied, starts producing a supply control signal Sc1 set at a first specific pattern in the section 21 and outputs this control signal to the supply unit 10 through the signal line L4. In this case, there is a probability that the level pattern of the control signal is distorted by a malfunction of the microcomputer 20 or noise mixed with the signal.

In contrast, when the ignition switch is switched off by the driver, the switch signal Sw is changed to the low level. In response to this level change, the microcomputer 30 outputs an off enabling signal Soff to the microcomputer 20 through signal line L6. The microcomputer 20 judges based on this off enabling signal and the switch signal Sw that an operation stop condition of the microcomputer 30 is satisfied, and the microcomputer 20 fixes or locks the signal level of the output port Pout1 to the low level. Then, the microcomputer 20 produces a cutoff control signal Sc2 set at a second specific pattern in the section 21 and outputs this control signal to the supplyunit 10 through the signal line L4. In this case, there is a probability that the level pattern of the control signal is distorted by a malfunction of the microcomputer 20 or noise mixed with the signal.

The supply unit 10 always monitors the voltage level of the signal line L4. When detecting a line transmission signal of the signal line L4 in response to a change in the voltage level of the signal line L4, the supply unit 10 performs the level pattern matching operation. In this matching operation, the supply unit 10 compares the changing pattern of the voltage level of the line transmission signal with first and second registered patterns stored in advance. The first registered pattern is set to coincide with the first specific pattern of the supply control signal Sc1. The second registered pattern is set to coincide with the second specific pattern of the cutoff control signal Sc2.

When the changing pattern of the voltage level of the line transmission signal matches with or is identical with the first registered pattern, the supply unit 10 recognized the reception of a supply control signal Sc1. In response to this recognition, the supply unit 10 supplies electric power to the secondary microcomputer 30. In response to this supply, the microcomputer 30 starts performing the running control for the devices. During the operation of the microcomputer 30, the microcomputer 20 repeatedly heightens and lowers the signal level of the output port Pout1. In contrast, when the changing pattern of the voltage level of the line transmission signal matches with or is identical with the second registered pattern, the supply unit 10 recognizes the reception of a cutoff control signal Sc2. In response to this recognition, the supply unit 10 cuts off electric power supplied to the secondary microcomputer 30.

In contrast, when at least one bit level of the power control signal Sc is undesirably changed due to a malfunction of the microcomputer 20 or the power supply 10, noise superimposed onto the signal or the like, the level pattern of the control signal Sc received in the supply unit 10 is differentiated from any of the first and second registered patterns. In this case, the changing pattern of the voltage level of the line transmission signal differs from any of the first and second registered patterns, and the supply unit 10 recognizes that the received level pattern is an abnormal pattern. In response to this recognition, the supply unit 10 disregards or invalidates the detected level change of the signal line L4 and maintains the supply or cutoff of electric power to the secondary microcomputer 30.

The microcomputer 20 may successively output supply control signals Sc for a predetermined period in response to the level change of the switch signal Sw to the high level. In this case, even when the level pattern of one supply control signal Sc1 is undesirably changed due to a malfunction of the microcomputer 20 or the power supply 10 or noise, the supply unit 10 can reliably supply electric power to the microcomputer 30 in response to another supply control signal Sc1.

In the same manner, the microcomputer 20 may successively output cutoff control signals Sc2 for a predetermined period in response to the level change of the switch signal Sw to the low level. In this case, even when the level pattern of one cutoff control signal Sc2 is undesirably changed due to a malfunction of the microcomputer 20 or the power supply 10 or noise, the supply unit 10 can reliably cut off electric power to the microcomputer 30 in response to another cutoff control signal Sc2.

Further, when the switch signal Sw is maintained in the high or low level, the microcomputer 20 may fix the signal line L4 to the high or low level. In this case, the software processing in the microcomputer 20 required for producing the control signal can be reduced. Further, even when the voltage level of the signal line L4 set in the high or low level is momentarily changed by a malfunction of the microcomputer 20 or noise, the changed level pattern in the signal line L4 is apparently different from any of the first and second registered patterns. Therefore, the supply unit 10 can reliably disregard or invalidate the level change of the signal line L4, and the supply unit 10 can continue supplying or cutting off electric power to the secondary microcomputer 30.

An example of the structure and function of the ECU 1 will be described in more detail.

The control signal producing section 21 of the microcomputer 20 produces a supply control signal Sc1 as a power control signal in response to the level change of the switch signal Sw to the high level or produces a cutoff control signal Sc2 as a power control signal in response to the level change of the switch signal Sw to the low level. The supply control signal Sc1 has bits set at a first specific pattern (or a power-on pattern) such as a series of four bit levels "1010". The cutoff control signal Sc2 has bits set at a second specific pattern (or a power-off pattern) such as a series of four bit levels "1100". The section 21 produces the power control signal Sc every pattern period of time and successively outputs the power control signals Sc from a control signal output port Pout2 to the supply unit 10 through a second signal line L4. The period of time required for the level pattern of the power control signal Sc is, for example, equal to the pattern period of time.

The supply unit 10 successively receiving the power control signals Sc further has a pattern recognition section 12 and a power supplying section 16. The section 12 performs a pattern recognition task according to each power control signal Sc transmitted from the microcomputer 20. More specifically, the section 12 recognizes a power control signal Sc having the level pattern matching with or being identical with a first registered pattern as a supply control signal Sc1, recognizes a power control signal Sc having the level pattern matching with or being identical with a second registered pattern as a cutoff control signal Sc2, and recognizes a level pattern of the signal differing from any of the first and second registered patterns as an abnormal pattern. The first registered pattern is set to accord with the first specific pattern. The second registered pattern is set to accord with the second specific pattern.

The section 16 starts supplying or continues supplying electric power of the supply voltage to the secondary microcomputer 30 in response to the recognition of the power control signal Sc as a supply control signal Sc1 in the section 12, starts or continues cutting off the electric power to the secondary microcomputer 30 in response to the recognition of the power control signal Sc as a cutoff control signal Sc2 in the section 12, and disregards or invalidates the control signal in response to the recognition of the level pattern of the power control signal as an abnormal pattern to continue the supply or cutoff of the electric power to the secondary microcomputer 30.

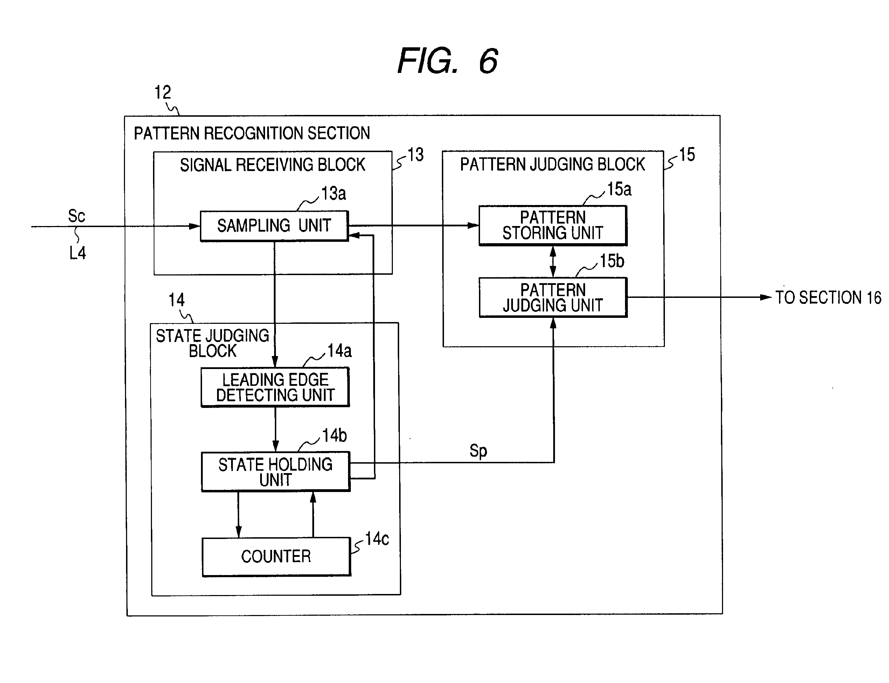

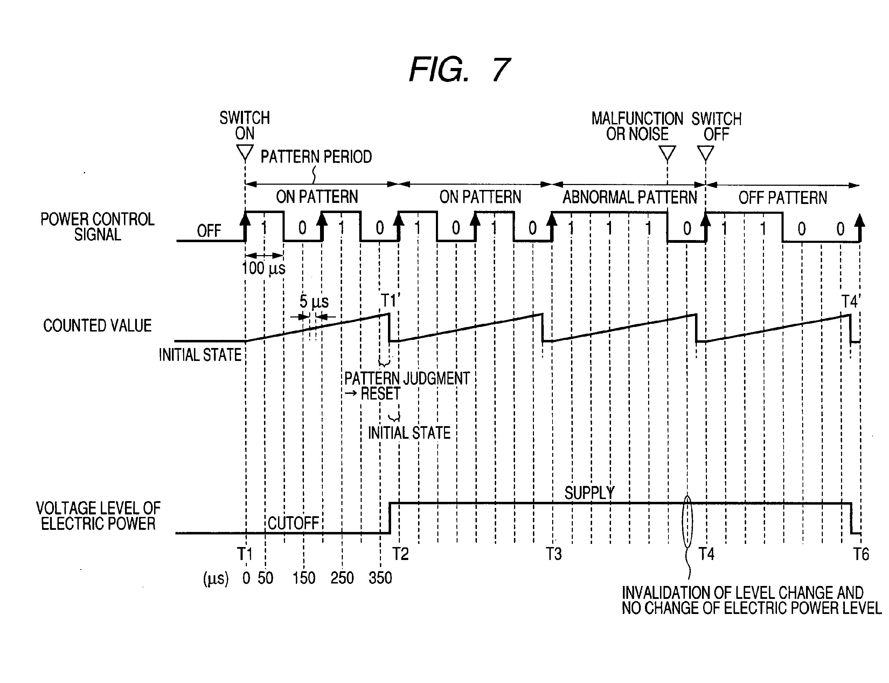

Fig. 6 is a block diagram of the pattern recognition section 12 of the supply unit 10. Fig. 7 is a timing chart of the power control signal, a counted value, and the voltage level of electric power supplied to the microcomputer 30. The cutoff control signal Sc2 has the level pattern "1100" , while the supply control signal Sc1 has the level pattern "1010".

As shown in Fig. 6 and Fig. 7, the pattern recognition section 12 has a signal receiving block 13 for always monitoring the voltage level of the signal line L4 to detect a changing pattern of the voltage level of a line transmission signal as a level pattern of a power control signal Sc transmitted from the microcomputer 20, a state judging block 14 for judging based on the voltage level of the signal line L4 monitored in the block 13 whether the pattern recognition task is in an initial state (i.e., a wait state) or a pattern recognition state, and a pattern judging block 15 for judging, when the pattern recognition task is in the pattern recognition state, whether or not the changing pattern of the voltage level of the line transmission signal detected in the block 13 is identical with the first or second registered pattern.

The signal receiving block 13 has a sampling unit 13a for detecting the voltage level of the line transmission signal in the signal line L4 at bit detecting timings as bit levels of a power control signal Sc transmitted from the microcomputer 20 one by one.

The state judging block 14 has a leading edge detecting unit 14a for detecting a change from the low level to the high level in the voltage level of the signal line L4 monitored in the block 13 as a leading edge at the top bit of a power control signal Sc (or a head of the signal) and detecting a leading edge of a succeeding power control signal Sc every pattern period of time, a state holding unit 14b for holding information of the pattern recognition state in place of the initial state for a state holding time, slightly shorter than the pattern period, in response to the detection of each leading edge and holding information of the initial state after an elapse of the state holding time, and a counter 14c for starting a counting operation in response to a change from the initial state to the pattern recognition state held in the unit 14b, incrementing a counted value one by one and resetting the counted value in response to a change from the pattern recognition state to the initial state.

The one-bit time required for the transmission of one bit of the signal is equal to 100 µ sec, and the counter 14c increments the counted value every 5 µ sec. Therefore, the counted value equal to one of specific values of 10, 30, 50 and 70 indicates the elapsed time 50 µ sec, 150 µ sec, 250 µ sec or 350 µ sec from the leading edge. Each specific counted value corresponds to the mid point of one bit of the power control signal Sc.

The state holding unit 14b determines a plurality of bit detecting timings in response to the respective specific counted values of the counter 14c for each power control signal Sc and instructs the sampling unit 13a to detect bit levels of the power control signal Sc at the respective bit detecting timings. Further, the unit 14b outputs a pattern judging instruction Sp to the pattern judging block 15 each time all bit levels of each power control signal Sc are detected in the sampling unit 13a.

The pattern judging block 15 has a pattern storing unit 15a and a pattern judging unit 15b. The unit 15a stores in advance the first and second registered patterns and receives and stores bit levels of each power control signal Sc detected at the bit detecting timings by the sampling unit 13a. The unit 15b receives the pattern judging instruction Sp from the unit 14b everypatternperiod, determines an actual level pattern of bits of the received power control signal Sc from the bit levels of the power control signal Sc stored in the unit 15a every reception of the pattern judging instruction Sp, compares the actual level pattern with each of the first and second registered patterns of the unit 15a, judges whether the actual level pattern is identical with one of the first and second registered patterns or differs from any of the first and second registered patterns, recognizes the power control signal Sc as a supply control signal Sc1 when the actual level pattern of the signal is identical with the first registered pattern, recognizes the power control signal Sc as a cutoff control signal Sc2 when the actual level pattern of the signal is identical with the second registered pattern, and recognizes the actual level pattern as an abnormal pattern when the actual level pattern differs from any of the first and second registered patterns.

Next, the operation of the microcomputers 20 and 30 will be described in detail.

When the switch signal Sw continues at the low level in response to the ignition switch being switched off, the microcomputer 20 maintains the output port Pout2 at the low level. In contrast, when the switch signal Sw continues at the high level in response to the ignition switch switched on, the microcomputer 20 maintains the output port Pout2 at the high level.

When the ignition switch is set at the low level, the CPU 32 of the secondary microcomputer 30 waits for a level change of the ignition switch to start a mode transfer process, and the CPU 23 of the primary microcomputer 20 waits for a level change of the ignition switch to start a power cutoff control process.

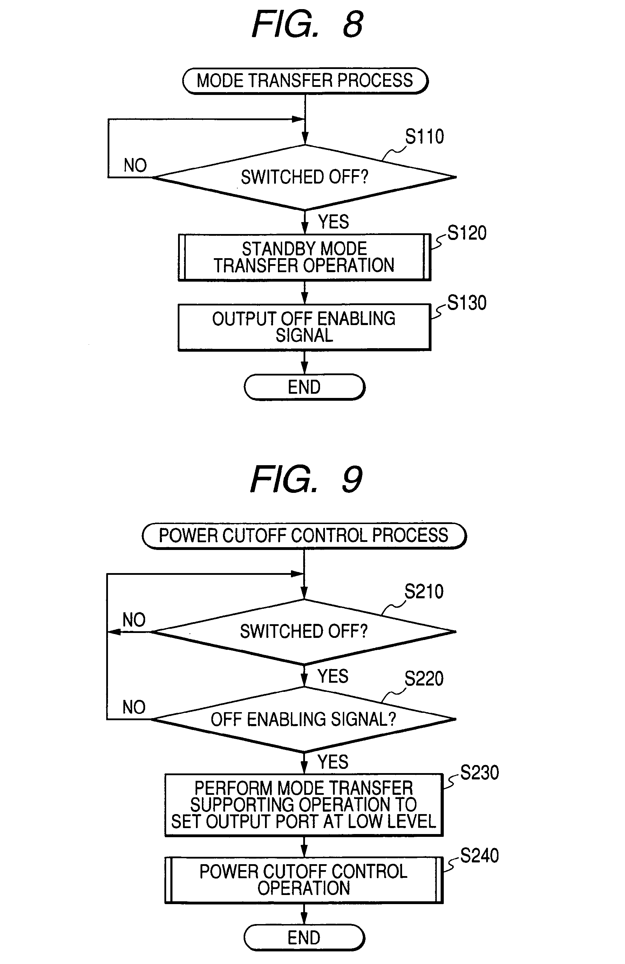

Fig. 8 is a flow chart showing a mode transfer process performed in the secondary microcomputer 30, and Fig. 9 is a flow chart showing a power cutoff control process performed in the primary microcomputer 20.

As shown in Fig. 8, the CPU 32 judges at step S110 whether or not the ignition switch is switched off to change the switch signal Sw to the low level. When the switch signal Sw continues at the high level, the processing at step S110 is again executed. In contrast, when the ignition switch is switched off, at step S120, the CPU 32 performs the standby mode transfer operation required to transfer the mode of the microcomputer 30 from the normal operation mode to the standby mode. More specifically, the CPU 32 performs a terminating operation to terminate communications with other microcomputers and devices and a data saving operation to save data of the microcomputer 30 in a save area.

Then, at step S130, the CPU 32 outputs an off enabling signal Soff to the primary microcomputer 20 through the line L6. This signal indicates that the microcomputer 20 is allowed to stop the supply of electric power to the microcomputer 30. Then, this mode transfer process is ended.

During the standby mode of the microcomputer 30, the microcomputer 30 is not substantially operated, so that the microcomputer 30 requires no electric power supplied from the supply unit 10. Therefore, electric power consumed in the ECU 1 is reduced.

As shown in Fig. 9, at step S210, the CPU 23 judges whether or not the ignition switch is switched off to change the switch signal Sw to the low level. When the switch signal Sw continuously set at the high level, the processing at step S210 is again executed. In contrast, when the switch signal Sw is changed to the low level, at step S220, the CPU 23 judges whether or not an off enabling signal Soff is received from the microcomputer 30. When no off enabling signal is received, the processing is returned to step S210. In contrast, when the CPU 23 receives an off enabling signal Soff from the microcomputer 30, at step S230, the CPU 23 realizes that the mode transfer from the normal operation mode to the standby mode in the microcomputer 30 is allowed. Therefore, the CPU 23 performs the mode transfer supporting operation required for transferring the mode of the microcomputer 30 from the normal operation mode to the standby mode. More specifically, the CPU 23 sets the signal level of the output port Pout 1 at the low level. Therefore, no signal set at the high level is outputted from the microcomputer 20 to the microcomputer 30.

Then, at step S240, the CPU 23 performs a power cutoff control operation for controlling the supply unit 10 to cutoff electric power to the microcomputer 30. More specifically, the CPU 23 produces a cutoff control signal Sc2 and outputs this signal to the supply unit 10. Then, this power cutoff control process is ended.

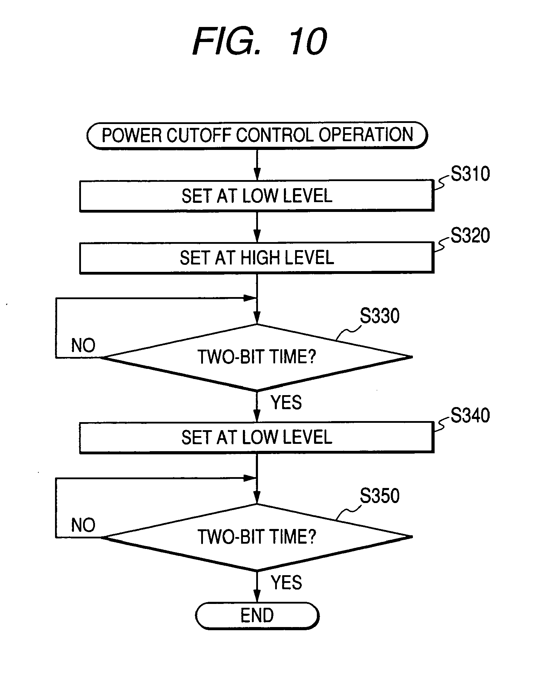

This control operation (step S240) will be described in more detail with reference to Fig. 10.

Fig. 10 is a flow chart showing the power cutoff control operation for producing a cutoff control signal Sc2 and outputting this signal from the microcomputer 20. A cutoff control signal Sc2 is, for example, indicated by a series of four bit levels "1100". To output each bit of this signal, it takes a one-bit time such as 100 µ second. The microcomputer 20 has a timer (not shown), and the CPU 23 receiving time information from the timer can detect an elapsed time after the outputting of each bit of the signal.

As shown in Fig. 10, at step S310, the CPU 23 of the microcomputer 20 initially sets the control signal output port Pout2 at the low level. The port Pout2 is connected with the supply unit 10 through the signal line L4. Then, at step S320, the CPU 23 sets the port Pout2 at the high level. This voltage level is transmitted to the supply unit 10 through the signal line L4. In response to this level change, the pattern recognition section 12 of the supply unit 10 detects a leading edge of a power control signal Sc, and the section 12 starts the pattern judgment and recognition.

Then, at step S330, the CPU 23 judges whether or not the elapsed time starting from the setting time of the high level reaches a two-bit time (e.g., 200 µ sec) required for outputting two bits of a cutoff control signal Sc2. When the elapsed time is shorter than the two-bit time, the processing at step S330 is again executed. In contrast, when the elapsed time reaches the two-bit time, the CPU 23 acknowledges that the top and second bits of a cutoff control signal Sc2 set at the high level have been outputted. Therefore, at step S340, the CPU 23 sets the port Pout2 at the low level.

Then, at step S350, the CPU 23 judges whether or not the elapsed time starting from the setting time of the low level reaches the two-bit time. When the elapsed time is shorter than the two-bit time, the processing at step S350 is again executed. In contrast, when the elapsed time reaches the two-bit time, the CPU 23 acknowledges that the third and final bits of the signal set at the low level have been produced and outputted. That is, the cutoff control signal Sc2 having the level pattern "1100" is outputted to the supply unit 10 through the signal line L4.

Therefore, the outputting of one cutoff control signal Sc2 is finished. This process may be repeatedly performed for a signal transmission period while omitting the step S310. In this case, even when the level pattern of one cutoff control signal Sc2 is changed due to a malfunction of the microcomputer 20 or the power supply 10, noise inserted into the signal or the like, the supply unit 10 can reliably receive another cutoff control signal Sc2 having the level pattern "1100".

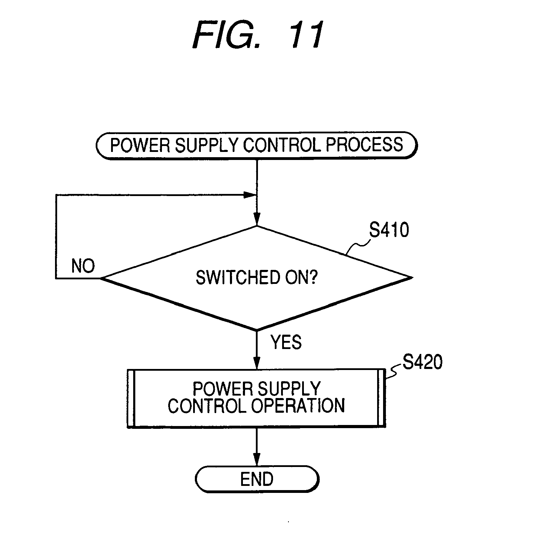

After the power cutoff control process shown in Fig. 9 is ended, the CPU 23 of the microcomputer 20 waits for a level change of the switch signal Sw to start a power supply control process. This process will be described with reference to Fig. 11.

Fig. 11 is a flow chart showing a power supply control process performed in the microcomputer 20.

As shown in Fig. 11, at step S410, the CPU 23 judges whether or not the ignition switch is switched on to change the switch signal Sw to the high level. When the ignition switch continues the off-state, the processing at step S410 is again executed. In contrast, when the ignition switch is switched on, at step S420, the CPU 23 perform a power supply control operation for controlling the supply unit 10 to supply electric power to the microcomputer 30. More specifically, the CPU 23 produces a supply control signal Sc1 and outputs this signal to the supply unit 10 through the signal line L4. Then, this power supply control process is ended.

Therefore, the supply unit 10 starts supplying electric power to the microcomputer 30 in response to this signal Sc1. When the microcomputer 30 receives the electric power from the supply unit 10, the microcomputer 30 is transferred to the normal operation mode by the CPU 32 of the microcomputer 30, and the CPU 32 performs various operations.

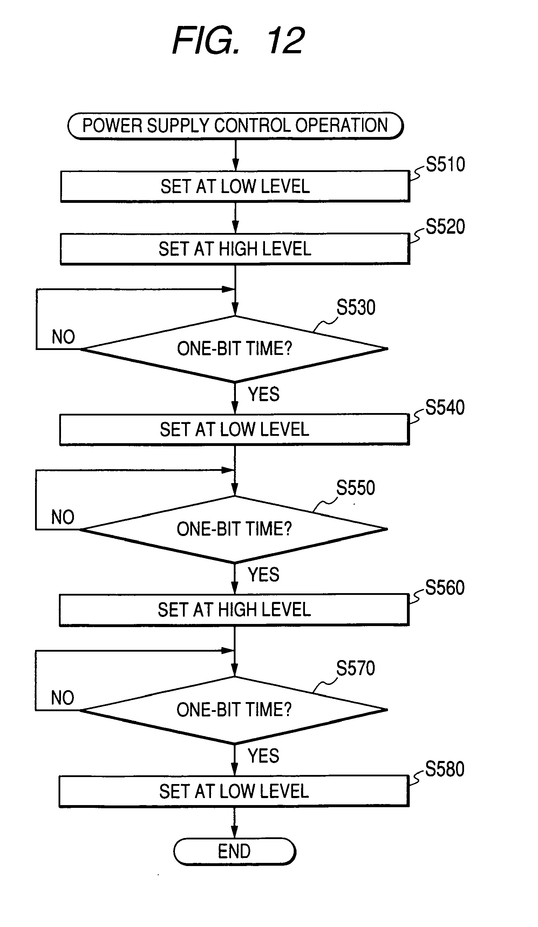

This control operation for producing and outputting the control signal Sc1 (step S420) will be described in more detail with reference to Fig. 12.

Fig. 12 is a flow chart showing the power supply control operation for producing the supply control signal Sc1 and outputting the signal from the microcomputer 20. The supply control signal Sc1 is, for example, indicated by a series of four bit levels "1010".

As shown in Fig. 12, at step S510, the CPU 23 initially sets the output port Pout2 at the low level. Then, at step S520, the CPU 23 sets the output port Pout2 at the high level. In this level change, the pattern recognition section 12 of the supply unit 10 detects a leading edge of a power control signal Sc, and the section 12 starts the pattern judgment and recognition.

Then, at step S530, the CPU 23 judges whether or not the elapsed time starting from the setting time of the high level reaches a one-bit time (e.g., 100 µ sec) required for outputting one bit of a supply control signal Sc1. When the elapsed time is shorter than the one-bit time, the processing at step S530 is again executed. In contrast, when the elapsed time reaches the one-bit time, the CPU 23 acknowledges that the top bit of a supply control signal Sc1 set at the high level has been produced and outputted. Therefore, at step S540, the CPU 23 sets the output port Pout2 to the low level.

Then, at step S550, the CPU 23 judges whether or not the elapsed time starting from the setting time of the low level reaches the one-bit time. When the elapsed time is shorter than the one-bit time, the processing at step S550 is again executed. In contrast, when the elapsed time reaches the one-bit time, the CPU 23 acknowledges that the second bit of a supply control signal Sc1 set at the low level has been produced and outputted. Therefore, at step S560, the CPU 23 sets the output port Pout2 to the high level.

Then, at step S570, the CPU 23 judges whether or not the elapsed time starting from the setting time of the high level reaches the one-bit time. When the elapsed time is shorter than the one-bit time, the processing at step S570 is again executed. In contrast, when the elapsed time reaches the one-bit time, the CPU 23 acknowledges that the third bit of a supply control signal Sc1 set at the high level has been produced and outputted. Then, at step S580, the CPU 23 sets the output port Pout2 to the low level. Therefore, the supply control signal Sc1 formed in the level pattern "1010" is outputted to the supply unit 10.

Then, this process is finished. This process may be repeatedly performed for a signal transmission period while omitting the step S510. In this case, the supply unit 10 can reliably receive the supply control signal Sc1.

Next, the pattern recognition process performed in the pattern recognition section 12 will be described with reference to Fig. 6, Fig. 7 and Fig. 13.

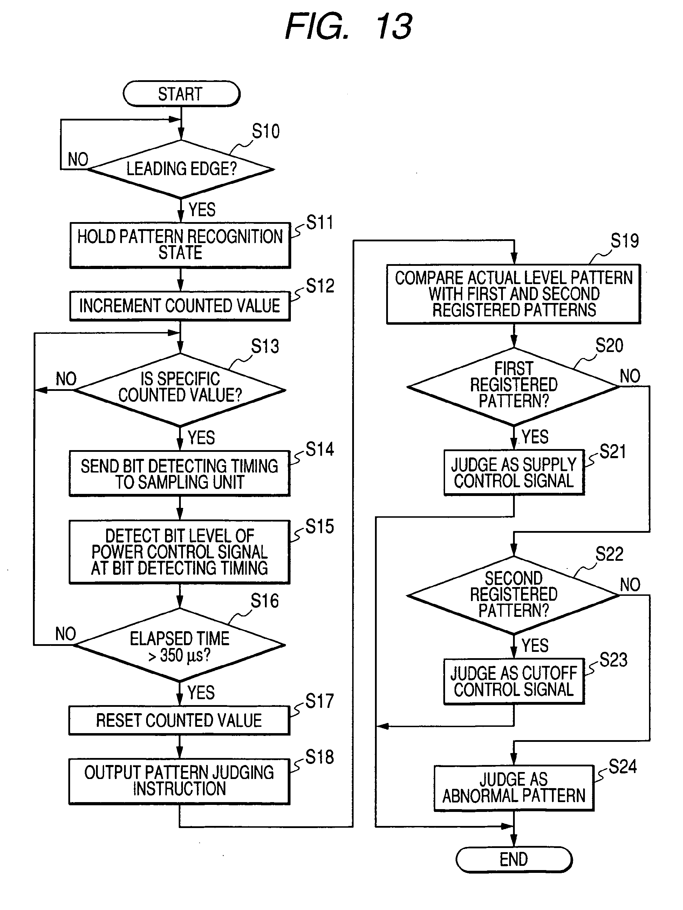

Fig. 13 is a flow chart of the pattern judgment and recognition performed in the pattern recognition section 12. The microcomputer 20 successively outputs the power control signals Sc to the supply unit 10 one after another.

As shown in Fig. 6, Fig. 7 and Fig. 13, the sampling unit 13a always monitors the voltage level of the signal line L4 to detect levels of a line transmission signal in the signal line L4 as levels of bits of a power control signal Sc transmitted from the microcomputer 20. At step S10, the pattern recognition section 12 judges whether or not the leading edge detecting unit 14a detects a leading edge of the top bit of a power control signal Sc received in the sampling unit 13a.

For example, when the ignition switch is switched on at the time T1 (affirmative judgment at S410 of Fig. 11), the supply unit 10 receives one supply control signal Sc1 in a period of time between the times T1 and T2. The unit 14a detects a leading edge of the top bit of the supply control signal Sc1 at the time T1. This detection is performed every pattern period of time for a signal transmission period. In response to this detection, at step S11, the state holding unit 14b holds information of the pattern recognition state in place of the initial state. Then, at step S12, the counter 14c starts a counting operation in response to the information of the pattern recognition state, increments a counted value by one every counting period of time (e. g. , 5 µ sec) . Therefore, the elapsed time from the leading edge of the signal can be indicated by the counted value.

At step S13, the holding unit 14b judges whether the counted value reaches one of specific values corresponding to respective elapsed times 50 µ sec, 150 µ sec, 250 µ sec or 350 µ sec from the detection of the leading edge. The mid point of the top bit of a power control signal Sc is detected at a bit detecting timing corresponding to the elapsed time of 50 µ sec. The mid point of the second bit of the signal Sc is detected at a bit detecting timing corresponding to the elapsed time of 150 µ sec. The mid point of the third bit of the signal Sc is detected at a bit detecting timing corresponding to the elapsed time of 250 µ sec. The mid point of the last bit of the signal Sc is detected at a bit detecting timing corresponding to the elapsed time of 350 µ sec. When the counted value does not reach any specific value, the procedure at step S13 is again executed. In contrast, when the counted value is equal to one specific value, at step S14, the holding unit 14b sends information of a bit detecting timing corresponding to the specific value to the sampling unit 13a. At step S15, the sampling unit 13a detects the level of one bit of a power control signal Sc at the received bit detecting timing and sends this level to the pattern storing unit 15a.

Then, at step S16, the holding unit 14b judges whether or not the counted value exceeds the specific value corresponding to the maximum elapsed time 350 µ sec. In the case of the negative judgment, the procedure returns to step S13. In contrast, in the case of the affirmative judgment, the section 12 acknowledges that the levels of all bits of a power control signal Sc have been detected. Therefore, at step S17, the counted value of the counter 14c is reset to zero at the time T1'. Then, at step S18, the holding unit 14b outputs a pattern judging instruction Sp to the judging unit 15b of the pattern judging block 15 and holds the initial state in place of the pattern recognition state.

At step S19, in response to the pattern judging instruction Sp, the judging unit 15b determines an actual level pattern of the power control signal Sc from the bit levels of the power control signal Sc stored in the storing unit 15a and compares the actual level pattern with each of the first and second registered patterns stored in advance in the unit 15a.

At step S20, the judging unit 15b judges whether or not the actual level pattern is identical with the first registered pattern. In the case of the affirmative judgment, at step S21, the judging unit 15b judges the received control signal as a supply control signal Sc1. In contrast, in the case of the negative judgment, at step S22, the judging unit 15b judges whether or not the actual level pattern is identical with the second registered pattern. In the case of the affirmative judgment, at step S23, the judging unit 15b judges the received control signal as a cutoff control signal Sc2. In contrast, in the case of the negative judgment, at step S24, the judging unit 15b judges that the actual level pattern is an abnormal pattern derived from a malfunction occurred in the primary microcomputer 20 or the power supply 10 or noise superimposed into the signal.

In the example of the power control signal Sc received between the times T1 and T2, the judging unit 15b judges the received control signal as a supply control signal Sc1 at step S21. Therefore, in response to the supply control signal Sc1, the power supply section 16 of the supply unit 10 supplies electric power of the supply voltage to the secondary microcomputer 30.

In contrast, when the ignition switch is switched off at the time T4 (affirmative judgment at S110 of Fig. 8 and S210 of Fig. 9), the supply unit 10 receives a cutoff control signal Sc2 formed in the level pattern "1100" in a period of time between the times T4 and T6, and the detecting unit 14a detects a leading edge of the top bit of a power control signal Sc at the time T4. Therefore, the judging unit 15b judges the power control signal Sc as a cutoff control signal Sc2, and the power supply section 16 cuts off electric power of the supply voltage to the microcomputer 30.

Further, when the CPU 23 continuously sets the signal line L4 at the low level in response to the switch signal Sw maintained to the high or low level, the voltage level of the signal line L4 is sometimes set to the high level at the time T3 due to a malfunction of the microcomputer 20 or noise, or the supply unit 10 detects the high level of the signal line L4 at the time T3 by mistake due to a malfunction of the supply unit 10.

In this case, the unit 14a detects a rise edge of the voltage level of the line transmission signal in the signal line L4 as a leading edge of the top bit of a power control signal Sc transmitted during a pattern period of time between the times T3 and T4. In this case, at step S18, the judging unit 15b determines an actual level pattern "1110" of the power control signal Sc. In response to this actual level pattern "1110", at step S24, the judging unit 15b judges that the power control signal Sc has an abnormal level pattern. Therefore, the power supply section 16 disregards or invalidates the received control signal having the actual level pattern "1110". That is, the section 16 performs no change in the electric power supply. Because the supply unit 10 supplies electric power to the secondary microcomputer 30 at the time T3, the supply unit 10 continues this supply.

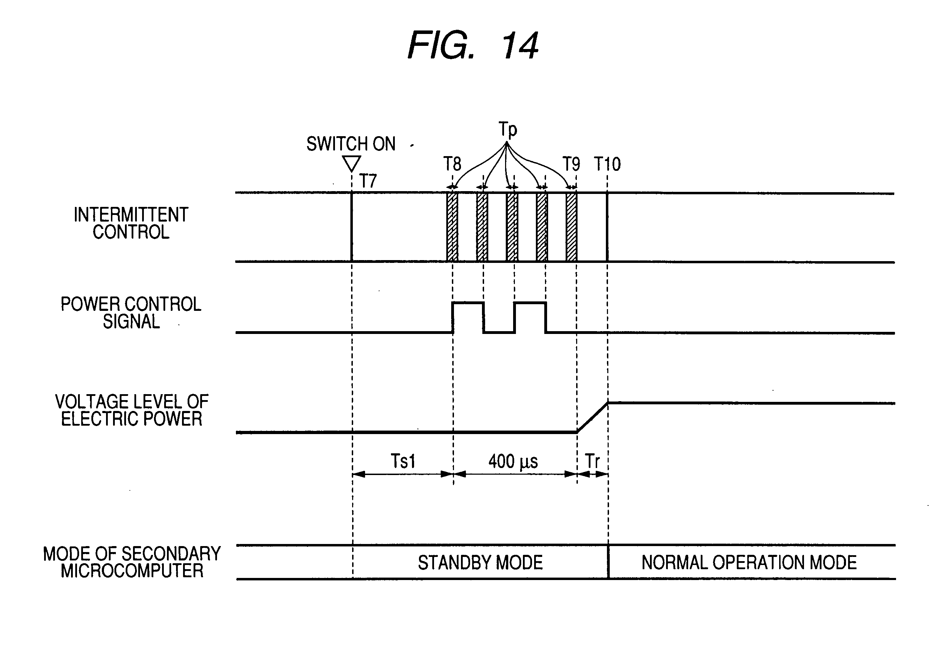

Next, the control operation of the CPU 23 of the primary microcomputer 20 will be described with reference to Fig. 14. Fig. 14 is a timing chart of an intermittent control operation of the microcomputer 20, the level of the power control signal Sc, the voltage level of electric power supplied to the microcomputer 30, and the mode of the microcomputer 30.

As shown in Fig . 14 , when the microcomputer 20 judges based on the switch signal Sw that the ignition switch is switched on at the time T7 (affirmative judgment at step S410, see Fig. 11), the microcomputer 20 starts performing an intermittent control operation at the time T8 to output a supply control signal Sc1 to the supply unit 10 (step S420) between the times T8 and T9.

The CPU 23 of the microcomputer 20 uses its resources for various tasks to perform the tasks parallel to one another. Therefore, all resources of the microcomputer 20 are not used for this control operation. More specifically, the microcomputer 20 intermittently performs the control operation at four level setting timings spaced by a predetermined period of time (e.g. , 100 µ sec) to produce one power control signal Sc indicated by four bit levels. To set each bit level of the signal, the microcomputer 20 performs the control operation for a short software process time Tp. Further, the microcomputer 20 requires a software process start time Ts1 to start the task. Therefore, the task start is delayed from the time T7 by the software process start time Ts1.

The supply unit 10 recognizes the received power control signal Sc as a supply control signal Sc1 at the time T9 and raises the level of electric power to a predetermined value (e.g. , 5V) . In this level change, it takes a rise time Tr, so that the supply of the electric power to the microcomputer 30 is started at the time T10 delayed from the time T9 by the rise time Tr. The microcomputer 30 is transferred from the standby mode to the normal operation mode at the time T10.

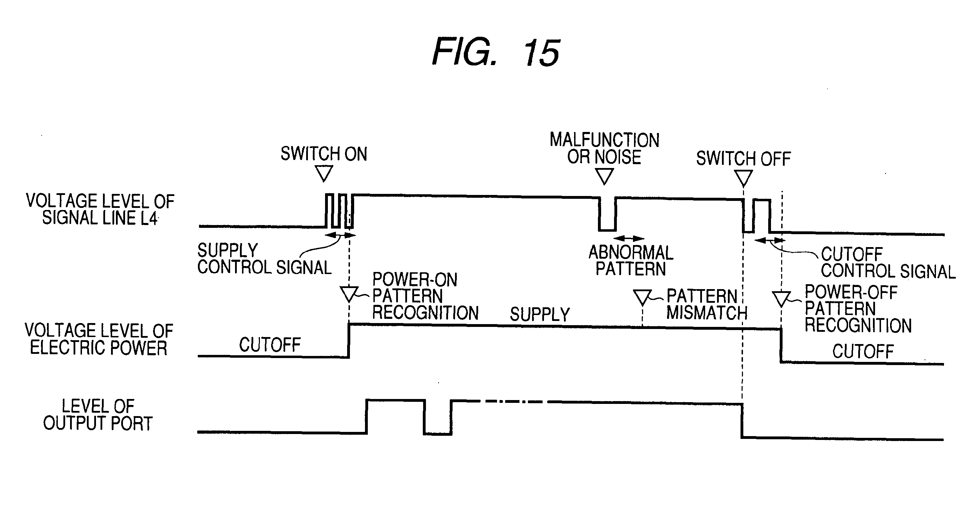

Effects in this embodiment will be described with reference to Fig. 15. Fig. 15 is a timing chart of a voltage level detected in the supply unit 10, the level of electric power and the signal level of the output port Pout1 connected with the microcomputer 30.

As shown in Fig. 15, in response to the level change of the switch signal Sw to the high level, a supply control signal Sc1 is transmitted to the supply unit 10 through the signal line L4, and the level pattern of the line transmission signal in the signal line L4 is changed. The supply unit 10 detects a level pattern of the line transmission signal in response to this change, judges that the level pattern of the line transmission signal is identical with the first registered pattern (affirmative judgment at step S20 of Fig. 13) and recognizes the reception of a supply control signal Sc1. In response to this pattern judgment and recognition, the supply unit 10 starts supplying electric power to the microcomputer 30 (step S21 of Fig. 13) . In response to this supply, the microcomputer 30 outputs an on-enabling signal Son to the microcomputer 20 through the signal line L6. This enabling signal indicates permission to transmit a signal from the microcomputer 20 to the microcomputer 30 through the signal line L3. In response to this enabling signal, the microcomputer 20 outputs a signal to the microcomputer 30 through the signal line L3. Therefore, the input port of the microcomputer 30 connected with the signal line L3 is frequently set at the high level.

In contrast, in response to the level change of the switch signal Sw to the low level, the microcomputer 30 outputs an off-enabling signal Soff to the microcomputer 20, and the microcomputer 20 fixes or locks the output port Pout1 to the low level (step S230 of Fig. 9). Further, a cutoff control signal Sc2 is transmitted to the supply unit 10 through the signal line L4, so that the level of the signal line L4 is once set at the low level (S310 in Fig. 10) and is changed to the high level (S320 in Fig. 10). The supply unit 10 detects a level pattern of a line transmission signal in the signal line L4 in response to this change, judges that the level pattern of the line transmission signal is identical with the second registered pattern (affirmative judgment at step S22 of Fig. 13) and recognizes the reception of a cutoff control signal Sc2. In response to this pattern judgment and recognition, the supply unit 10 cuts off electric power to the microcomputer 30 (step S23 of Fig. 13).

When a malfunction of the microcomputer 20 or the power supply 10 or noise occurs during the supply or cutoff of the electric power to the microcomputer 30, the supply unit 10 detects the voltage level of the line transmission signal set at an abnormal level pattern as a power control signal Sc. In this case, the probability that this abnormal level pattern is identical with the first registeredpattern (i.e., first specific pattern) or the second registeredpattern (i.e., second specific pattern) is very low. Therefore, the section 12 disregards or invalidates a level change in the signal line L4 caused by the malfunction of the microcomputer 20 or the noise or a level change in the signal line L4 caused by the malfunction of the supply unit 10. As a result, the power supply 10 maintains the supply or cutoff of electric power to the microcomputer 30.

The reason that the abnormal level pattern is substantially different from the first and second specific patterns is as follows. Each of the supply control signal Sc1 and the cutoff control signal Sc2 is set at a significant level pattern which is intentionally, artificially, ingeniously and/or uniquely set to be easily distinguished from an abnormal level pattern caused by a malfunction of the microcomputer 20 or the power supply 10 or noise inserted into the signal. For example, each of the supply control signal Sc1 and the cutoff control signal Sc2 is composed of a plurality of bits or portions set at the high level and a plurality of bits or portions set at the low level. In contrast, the abnormal level pattern is composed of a single bit or portion set at the high level and other bits or portions set at the low level when the primary microcomputer 20 intends to maintain the signal line L4 to the low level, and the abnormal level pattern is composed of a single bit or portion set at the low level and other bits or portions set at the high level when the primary microcomputer 20 intends to maintain the signal line L4 to the high level.

Therefore, the ECU 1 can reliably distinguish the abnormal level pattern from the level patterns of the supply and cutoff control signals Sc. Further, because the significant level patterns of the supply and cutoff control signals Sc are differentiated from each other, the ECU 1 can reliably distinguish the supply and cutoff control signals Sc from each other.

As a result, during the period that the signal line L3 connecting the microcomputers 20 and 30 is set at the high voltage level, there is no probability that the supply unit 10 suddenly cuts off the electric power to the microcomputer 30. In other words, before the cutoff of the electric power to the microcomputer 30, the microcomputer 20 reliably fixes or locks the signal line L3 to the low level.

Therefore, even when a malfunction of the primary microcomputer 20 or the power supply 10 occurs or noise changes the voltage level of the signal line L4 connecting the microcomputer 20 and the supply unit 10, there is no probability that the supply unit 10 recognizes the level change of the signal line L4 as a cutoff control signal Sc2 set at a significant level pattern during the supply of electric power to the microcomputer 30.

Accordingly, the supply unit 10 can reliably continue the supply of electric power to the microcomputer 30 against the malfunction or the noise, and the ECU 1 can reliably prevent an electric current from flowing through the microcomputer 30 not operated. That is, the ECU 1 can reliably prevent the increase of a standby power consumed in the ECU 1 or a failure of the secondary microcomputer 30.

Further, even when a malfunction of the primary microcomputer 20 or the power supply 10 occurs or noise changes the voltage level of the signal line L4, there is no probability that the supply unit 10 recognizes the level change of the signal line L4 as a supply control signal Sc1 set at a significant level pattern during the cutoff of electric power to the microcomputer 30. Accordingly, the ECU 1 can prevent the microcomputer 30 from unnecessarily starting the operation, and the unnecessary increase of electric power consumed in the ECU 1 can be suppressed.

Moreover, the microcomputer 20 outputs a series of supply control signals Sc1 to the supply unit 10 in response to the level change of the switch signal Sw to the high level. In this case, even when the malfunction or the noise changes the level pattern of one supply control signal Sc1, the supply unit 10 can reliably detect another supply control signal Sc1. Accordingly, the ECU1 can reliably start the operation of the microcomputer 30 in response to the switch signal Sw.

In the same manner, the microcomputer 20 outputs a series of cutoff control signals Sc2 to the supply unit 10 in response to the level change of the switch signal Sw to the low level. In this case, even when the malfunction or the noise changes the level pattern of one cutoff control signal Sc2, the supply unit 10 can reliably detect another cutoff control signal. Accordingly, the ECU1 can reliably stop the operation of the microcomputer 30 in response to the switch signal Sw so as to reduce electric power consumed in the ECU 1.

Furthermore, the supply unit 10 detects the power control signal Sc bit by bit. Accordingly, even when the detecting timing of one bit of the signal is slightly shifted from the mid point of the one-bit time, the supply unit 10 can reliably and correctly detect the level of the bit of the signal.

Still further, the counter 14c of the supply unit 10 counts the counted value in a cycle (e.g., 5 µ sec) sufficiently shorter than the one-bit time (e.g., 100 µ sec), and the holding unit 14b of the supply unit 10 determines the bit detecting timing from the counted value. Accordingly, the supply unit 10 can reliably detect the power control signal Sc bit by bit.

Still further, the counter 14c is immediately initialized after all bits of one power control signal Sc are detected. Therefore, the supply unit 10 can reliably detect the next power control signal Sc. Accordingly, the ECU 1 can smoothly perform the change between the power supply and the power cutoff.

In this embodiment, the sampling unit 13a of the section 12 detects the level of each bit of the control signal at the timing corresponding to the mid point of the one-bit time. However, the sampling unit 13a may detect the bit level at any time during the one-bit time. Alternatively, the sampling unit 13a may always detect levels of all bits of the control signal by monitoring the bit levels of the signal.

Further, in this embodiment, the power control signal Sc is transmitted through the signal line L4. However, the power control signal Sc may be sent to the control unit 10 by wireless. Therefore, the signal line L4 includes a wireless signal path.

### EMBODIMENT 2

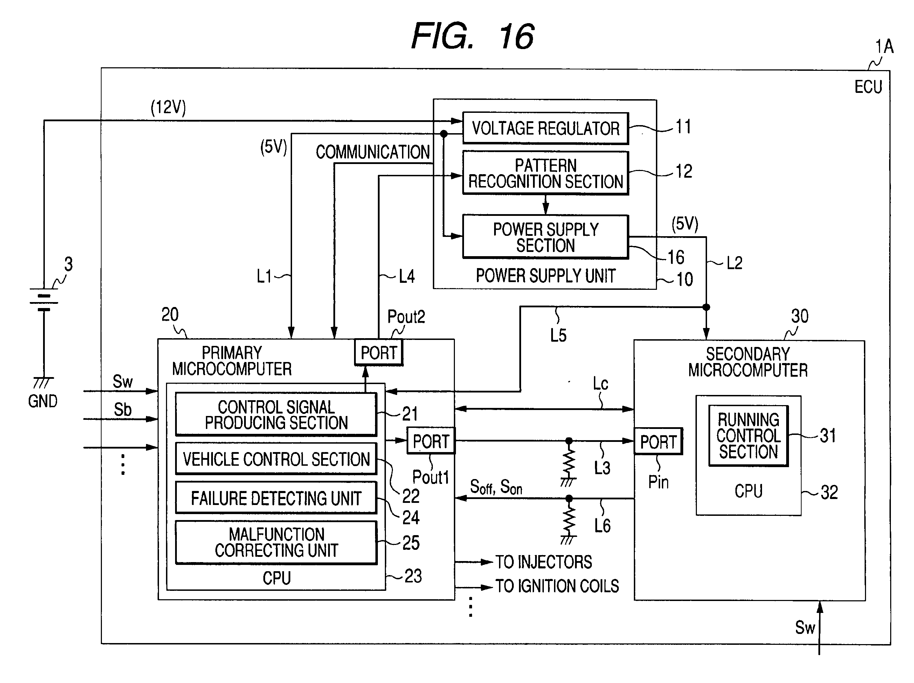

Fig. 16 is a block diagram of an ECU 1A according to the second embodiment.

As shown in Fig. 16, an ECU 1A differs from the ECU 1 (see Fig. 5) in that the section 21 of the primary microcomputer 20 has a failure detecting unit 24 for receiving a monitoring signal from the supply unit 10 through a monitoring signal line L5, judging based on the monitoring signal whether or not the cutoff or supply of electric power from the supplyunit 10 to the secondary microcomputer 30 is correctly or appropriately performed according to a cutoff control signal Sc2 or a supply control signal Sc1, and detecting a failure (e.g., a malfunction of the microcomputer 20 or the supply unit 10, noise changing the voltage level of the signal line L4, or the like) when the cutoff or supply of electric power is not correctly or appropriately performed according to the control signal. The monitoring signal indicates the voltage level of the electric power supplied from the supply unit 10 to the microcomputer 30.

The section 21 of the microcomputer 20 may have a malfunction correcting unit 25 for correcting a malfunction of the microcomputer 20 detected in the failure detecting unit 24.

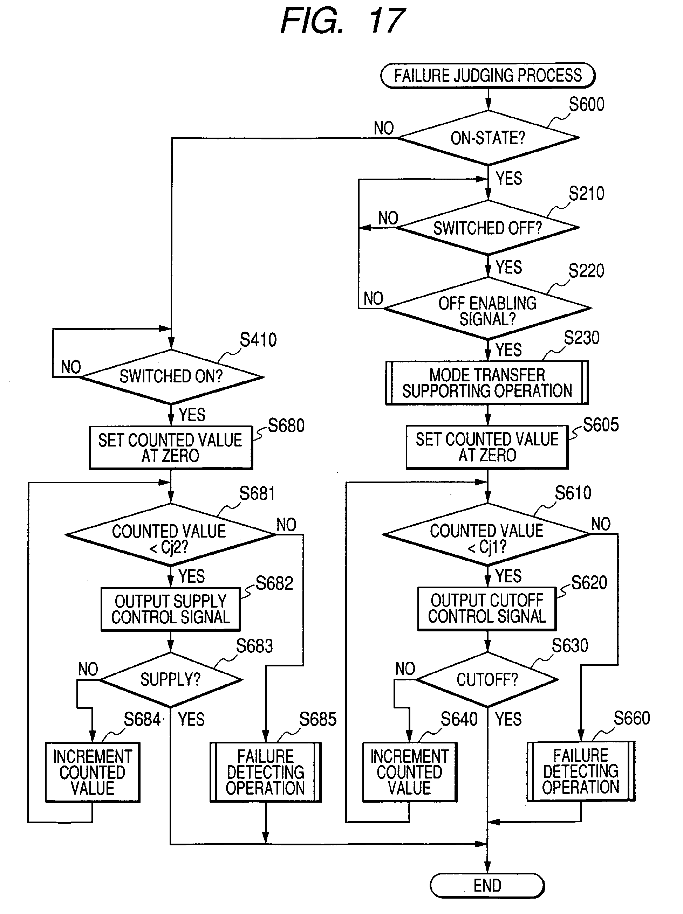

The failure judging process of the unit 24 will be described with reference to Fig. 16 and Fig. 17. Fig. 17 is a flow chart showing the failure judging process of the unit 24 according to the second embodiment.

As shown in Fig. 16 and Fig. 17, at step S600, the CPU 23 judges whether or not the ignition switch is in the on-state in response to the switch signal Sw set at the high level. In the case of the affirmative judgment, the CPU 23 performs the processing at step S210. When the ignition switch is switched off to change the switch signal Sw to the low level, the microcomputer 20 performs steps S220 and S230 in the same manner as the power cutoff control process (see Fig. 9) in the first embodiment, and the CPU 23 performs a failure judging operation.

In this operation, at step S605, the failure detecting unit 24 of the CPU 23 initially sets a failure counted value of a counter at zero. Then, at step 610, the unit 24 judges whether or not the counted value is lower than a failure judging value Cj1. In the case of the affirmative judgment, at step S620, the unit 24 outputs a cutoff control signal Sc2 to the supply unit 10 in the same manner as the power cutoff control process at steps S310 to S350 (see Fig. 10) in the first embodiment. Then, at step S630, the unit 24 judges based on the monitoring signal whether or not the supply unit 10 cuts off electric power to the microcomputer 30. In the case of the negative judgment, the unit 24 realizes that the microcomputer 20 has failed to control the supply unit 10. Therefore, the counted value is incremented by one at step S640, and the processing at step S610 is again executed. Therefore, when the supply unit 10 continues no cutoff of electric power to the microcomputer 30, the microcomputer 20 repeatedly produces the cutoff control signal Sc2 and outputs the signal to the supplyunit 10 (step S620) until the counted value reaches the value Cj1.

When the counted value reaches the value Cj1 (negative judgment at step S610), the unit 24 realizes that a failure has occurred in the ECU 1A. Therefore, the CPU 23 performs a failure detecting operation at step S660, and this failure judging process is ended. For example, in the failure detectingoperation, failure information indicating a failure in cutting off electric power to the microcomputer 30 is stored in a random access memory (RAM) or an electrically erasable and programmable read only memory (EEPROM) denoting a non-volatile memory, and the CPU 23 outputs the failure information to a display, a lamp, a buzzer or the like.

In the case of the negative judgment at step S600, the CPU 23 executes the processing at step S410 in the same manner as the power supply control process (see Fig. 11) in the first embodiment. When the ignition switch is switched on, the CPU 23 performs another failure detecting operation.

In this operation, at step S680, the unit 24 initially sets a counted value of the failure counter at zero. Then, at step 681, the unit 24 judges whether or not the counted value is lower than a failure judging value Cj2. In the case of the affirmative judgment, at step S682 , the unit 24 outputs a supply control signal Sc1 to the supply unit 10 in the same manner as the power supply control process at steps S510 to S580 (see Fig. 12) in the first embodiment. Then, at step S683, the unit 24 judges based on the monitoring signal whether or not the supply unit 10 has started supplying electric power to the microcomputer 30. In the case of the negative judgment, the unit 24 realizes that the microcomputer 20 has failed to control the supply unit 10. Therefore, the counted value is incremented by one at step S684, and the processing at step S681 is again executed. Therefore, when the supply unit 10 continues no supply of electric power to the microcomputer 30, the microcomputer 20 repeatedly produces the supply control signal Sc1 and outputs the signal to the supply unit 10 (step S682) until the counted value reaches the value Cj2.

When the counted value reaches the value Cj2 (negative judgment at step S681), the unit 24 realizes that a failure has occurred in the ECU 1A. Therefore, the CPU 23 performs a failure detecting operation at step S685, and this failure judging process is ended. For example, in the failure detecting operation, failure information indicating a failure in supplying electric power to the microcomputer 30 is stored and is output.

The malfunction correcting unit 25 may correct a malfunction of the microcomputer 20 detected in the failure detecting unit 24 at steps S660 and S686.

Therefore, even when the cutoff or supply of electric power to the microcomputer 30 is delayed or failed by a failure such as the malfunction of the microcomputer 20 or the supply unit 10 or the noise, the cutoff or supply control signal Sc is repeatedly transmitted from the microcomputer 20 to the supply unit 10. Accordingly, the power cutoff control process and the power supply control process can be further reliably performed.

Further, even when the failure repeatedly occurs, failure information is stored. Accordingly, the ECU 1A can examine a type of the failure and the cause of the failure by analyzing the stored failure information.

### THIRD EMBODIMENT

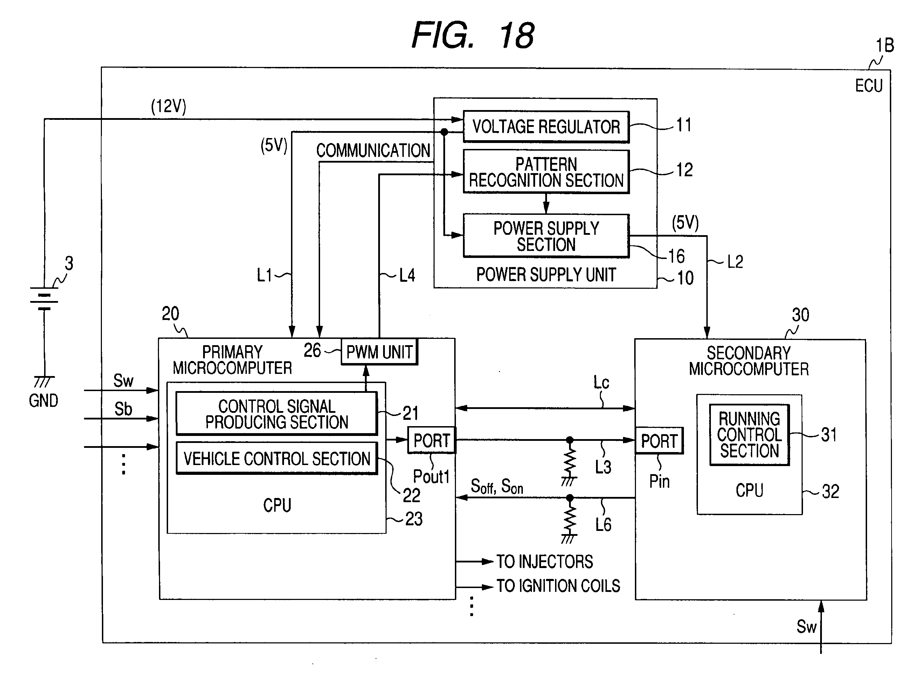

Fig. 18 is a block diagram of an ECU 1B according to the third embodiment.

As shown in Fig. 18, an ECU 1B differs from the ECU 1 (see Fig. 5) in that the primary microcomputer 20 has a pulse wave modulation (PWM) unit (or a pulse producing unit) 26 in place of the output port Pout2. In response to a starting instruction from the CPU 23 of the microcomputer 20, the operation of the PWM unit 26 is started. During the operation of the PWM unit 26, the PWM unit 26 continues producing a first pulse signal having a plurality of pulses at equal intervals at a first duty ratio as a series of cutoff control signals Sc2 or continues producing a second pulse signal having a plurality of pulses at equal intervals at a second duty ratio as a series of supply control signals Sc1. In response to an end instruction from the CPU 23, the production of the pulse signal in the PWM unit 26 is ended.

For example, the pulses in each of the first and second pulse signals are placed in the common cycle of 400 µ sec, each pulse of the first pulse signal has a first pulse width of 100 µ sec, and each pulse of the second pulse signal has a second pulse width of 200 µ sec. That is, the first pulse signal is set at the first duty ratio of 0.25, and the second pulse signal is set at the second duty ratio of 0.50. The pattern recognition section 12 of the supply unit 10 is designed so as to recognize two pulses of the pulse signal in the double cycle of 800 µ sec as one power control signal Sc.

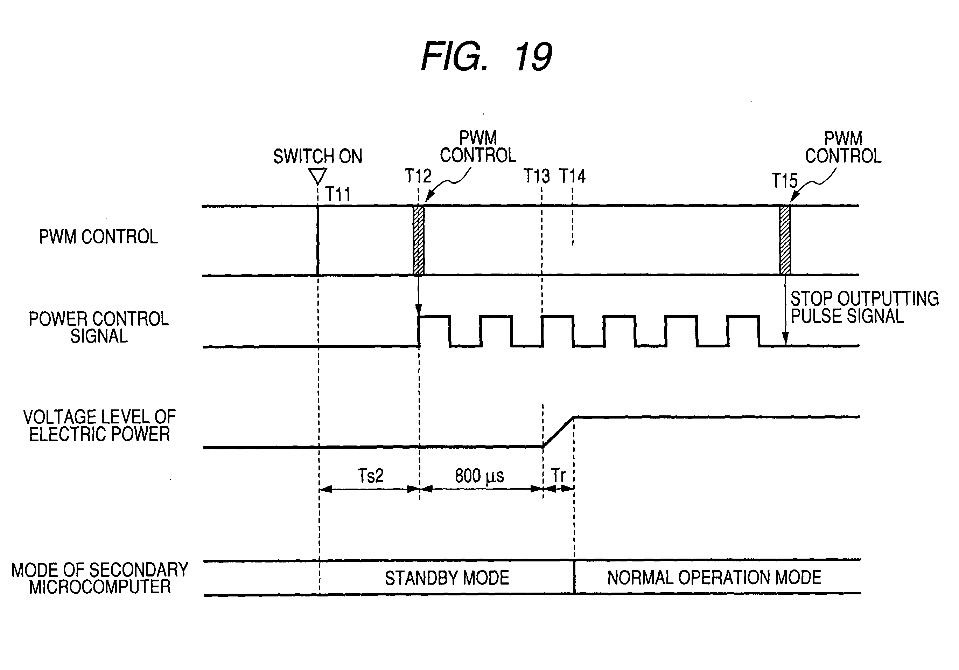

The control operation of the CPU 23 of the primary microcomputer 20 will be described with reference to Fig. 19. Fig. 19 is a timing chart of the level of the power control signal Sc, the level of electric power supplied to the microcomputer 30 and the mode of the microcomputer 30 in a PWM control operation of the microcomputer 20.

As shown in Fig. 19, the signal line L4 of the power control signal Sc is set at the low level when the microcomputer 30 is set in the standby mode. When the microcomputer 20 judges based on the switch signal Sw that the ignition switch is switched on at the time T11, the microcomputer 20 starts a PWM control operation at the time T12 to output the second pulse signal to the supply unit 10 as a series of supply control signals Sc1. The period of time between the times T11 and T12 is called a hardware start period of time Ts2 . Therefore, one supply control signal Sc1 is first outputted between the times T12 and T13.

The section 12 of the supply unit 10 detects one leading edge of the second pulse signal at the time T12. In response to this detection, the section 12 performs the pattern recognition for the pulse signal. When the section 12 recognizes the pulse signal as a supply control signal Sc1 at the time 13, the supply unit 10 starts supplying electric power to the microcomputer 30 at the time T14, and the mode of the microcomputer 30 is changed to the normal operation mode. Thereafter, in response to an elapse of a predetermined period of time from the time T12, the microcomputer 20 stops outputting the pulse signal at the time T15 to set the signal line L4 at the low level.

In the same manner, when the microcomputer 20 judges based on the switch signal Sw that the ignition switch is switched off during the normal operation mode of the microcomputer 30, the microcomputer 20 starts a PWM control operation to output the first pulse signal to the supply unit 10 as a series of cutoff control signals Sc2. The section 12 detects one leading edge of the first pulse signal and performs the pattern recognition for the pulse signal. When the section 12 recognizes the pulse signal as a cutoff control signal Sc2 at the time delayed from the leading edge detection by the double cycle of 800 µ sec, the section 16 starts supplying electric power to the microcomputer 30. Thereafter, in response to an elapse of a predetermined period of time from the outputting of the first pulse signal, the microcomputer 20 stops outputting the pulse signal to set the signal line L4 at the low level.

Therefore, the CPU 23 of the microcomputer 20 performs the control operation for the PWM unit 26 only to start producing the pulse signal and to stop producing the signal. The pulse signal is produced by the hardware of the PWM unit 26 without performing the arithmetic operation of the CPU 23. For example, when the ignition switch is switched on, the CPU 23 instructs the PWM unit 26 only at the times T12 and T15. Accordingly, the load on the CPU 23 can be reduced.

Further, because hardware of the PWM unit 26 produces and outputs the pulse signal, the software process start time Ts1 (refer to Fig. 14) is not required to produce the power control signal Sc in the software process of the CPU 23, but the hardware start time Ts2 is required to produce the pulse signal in hardware of the section 21. The time Ts2 is much shorter than the time Ts1. Therefore, the power control signal Sc can be produced and outputted in a short time in response to the switch signal Sw. That is, electric power supplied to the microcomputer 30 can be cutoff in a short time, and the cutoff of electric power to the microcomputer 30 can be changed to the supply of electric power in a short time. Accordingly, electric power consumed in the microcomputer 30 can be reduced in the change from the power supply to the power cutoff, and the operation of the microcomputer 30 can be promptly started in the change from the power cutoff to the power supply. That is, the starting performance of the microcomputer 30 can be improved.

Moreover, the pulse signal produced in the PWM unit 26 can be arbitrarily set to have a plurality of pulses in a shorter cycle while maintaining the duty ratio. Therefore, the time length of the power control signal Sc can be shortened. Accordingly, the ECU 1B can quickly change the power supply to the power cutoff or change the power cutoff to the power supply.

### FOURTH EMBODIMENT

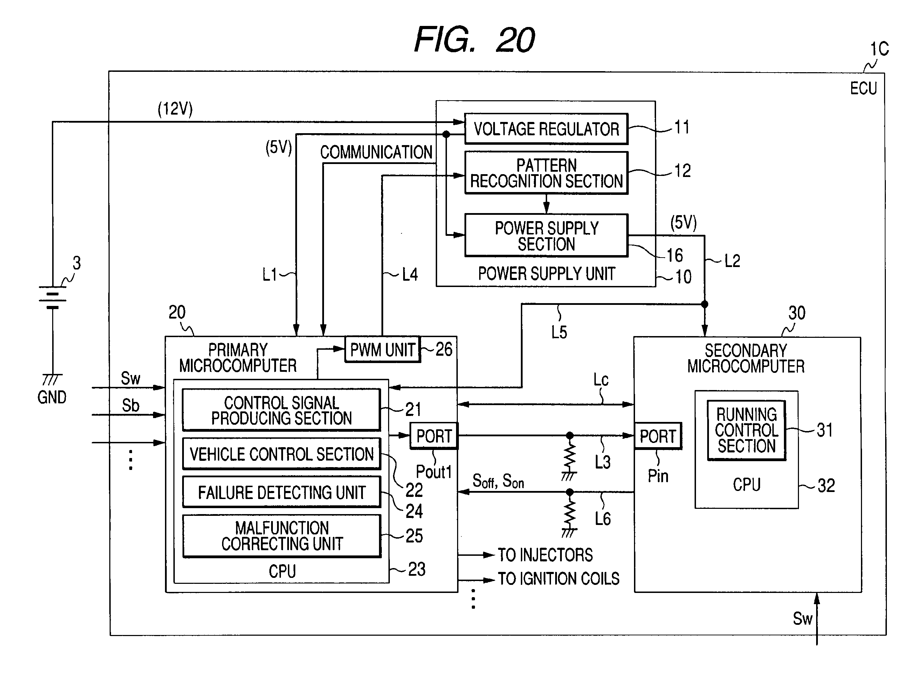

Fig. 20 is a block diagram of an ECU 1C according to the fourth embodiment.

As shown in Fig. 20, an ECU 1C differs from the ECU 1B (see Fig. 18) in that the section 21 of the microcomputer 20 has the failure detecting unit 24 and the malfunction correcting unit 25 (refer to Fig. 16). That is, the technical features of the third embodiment may be combined with the technical features of the second embodiment.

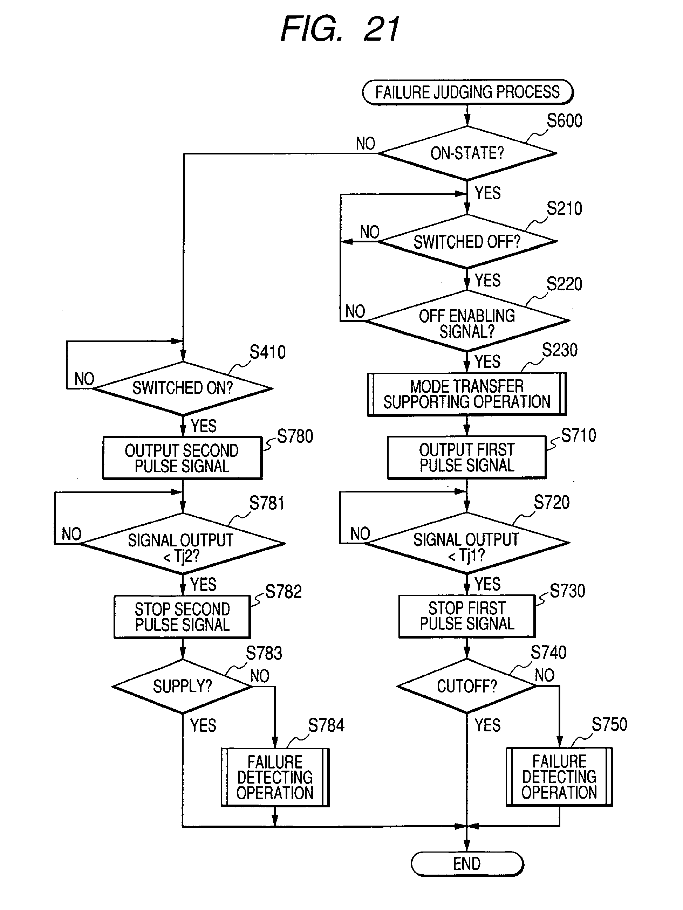

The failure judging process of the unit 24 will be described with reference to Fig. 20 and Fig. 21. Fig. 21 is a flow chart showing the failure judging process of the unit 24 according to the fourth embodiment.

As shown in Fig. 20 and Fig. 21, at step S600, when the CPU 23 judges that the switch signal Sw is set at the high level, the CPU 23 performs the processing at step S210. When the ignition switch is switched off to change the switch signal Sw to the low level, the microcomputer 20 performs steps S220 and S230 in the same manner as the power cutoff control process (see Fig. 9) in the first embodiment, and the CPU 23 performs a failure judging operation.

In this operation, at step S710, the failure detecting unit 24 controls the PWM unit 26 to output the first pulse signal as a series of cutoff control signals Sc2. Then, at step S720, the unit 24 judges whether or not the continuation time of the outputting of the first pulse signal exceeds a failure judging time Tj1. The CPU 23 of the microcomputer 20 has a timer, so that the unit 24 performs this judgment according to time information of the timer. For example, time information is indicated by a counter value of a counter. In the case of the negative judgment, the procedure returns to step S720. In contrast, when the time Tj1 has elapsed, at step S730, the unit 24 controls the PWM unit 26 to stop outputting the first pulse signal. Therefore, the PWM unit 26 continues outputting the first pulse signal for the failure judging time Tj1. When the supply unit 10 correctly receives the first pulse signal from the microcomputer 20, the supply unit 10 cuts off electric power to the microcomputer 30. In contrast, in the case of the malfunction of the microcomputer 20 or the supply unit 10 or the noise, the supply unit 10 sometimes continues the supply of electric power to the microcomputer 30 by mistake.

Thereafter, at step S740, the unit 24 judges based on the monitoring signal of the line L5 whether or not the supply unit 10 cuts off electric power to the microcomputer 30. In the case of the affirmative judgment, the failure judging process is ended. In contrast, in the case of the negative judgment, the unit 24 realizes that a failure has occurred in the ECU 1C. Therefore, the CPU 23 performs a failure detecting operation at step S750, and this failure judging process is ended. For example, in this failure detecting operation, failure information indicating a failure in cutting off electric power to the microcomputer 30 is stored in a RAM or an EEPROM, and the CPU 23 outputs the failure information to a display, a lamp, a buzzer or the like.

In the case of the negative judgment at step S600, the CPU 23 executes the processing at step S410 in the same manner as the power supply control process (see Fig. 11) in the first embodiment. When the ignition switch is switched on, the CPU 23 performs another failure judging operation.

In this operation, at step S780, the failure detecting unit 24 controls the PWM unit 26 to output the second pulse signal as a series of supply control signals Sc1. Then, at step S781, the unit 24 judges whether or not the continuation time of the outputting of the second pulse signal exceeds a failure judging time Tj2. In the case of the negative judgment, the procedure returns to step S781. In contrast, when the time Tj2 has elapsed, at step S782, the unit 24 controls the PWM unit 26 to stop outputting the second pulse signal. Therefore, the PWM unit 26 continues outputting the second pulse signal for the failure judging time Tj2. When the supply unit 10 correctly receives the second pulse signal from the microcomputer 20, the supply unit 10 supplies electric power to the microcomputer 30. In contrast, in the case of the malfunction of the microcomputer 20 or the supply unit 10 or the noise, the supply unit 10 sometimes continues the cutoff of electric power to the microcomputer 30 by mistake.

Thereafter, at step S783, the unit 24 judges based on the monitoring signal of the line L5 whether or not the supply unit 10 has started supplying electric power to the microcomputer 30. In the case of the affirmative judgment, the failure judging process is ended. In contrast, in the case of the negative judgment, the unit 24 realizes that a failure has occurred in the ECU 1C. Therefore, at step S784, the CPU 23 performs a failure detecting operation, and this failure judging process is ended. For example, in this failure detecting operation, failure information indicating a failure in supplying electric power to the microcomputer 30 is stored in the RAM or the EEPROM, and the CPU 23 outputs the failure information.

Accordingly, even when the cutoff or supply of electric power to the microcomputer 30 fails due to a failure such as a malfunction of the microcomputer 20 or the supply unit 10 or noise, the ECU 1C can examine a type of the failure and the cause of the failure by analyzing the stored failure information.

### FIFTH EMBODIMENT

In the first embodiment, the power control signal Sc is transmitted through a single line. However, the microcomputer 20 may simultaneously transmit a pluralityof types of power control signals to the supply unit 10 through respective signal lines to control the supply unit 10 to perform a pattern judgment for the combination of the signals. In this case, the amount of information in each signal can be reduced, so that the supplyunit 10 can finish the reception of the signals in a shorter time.

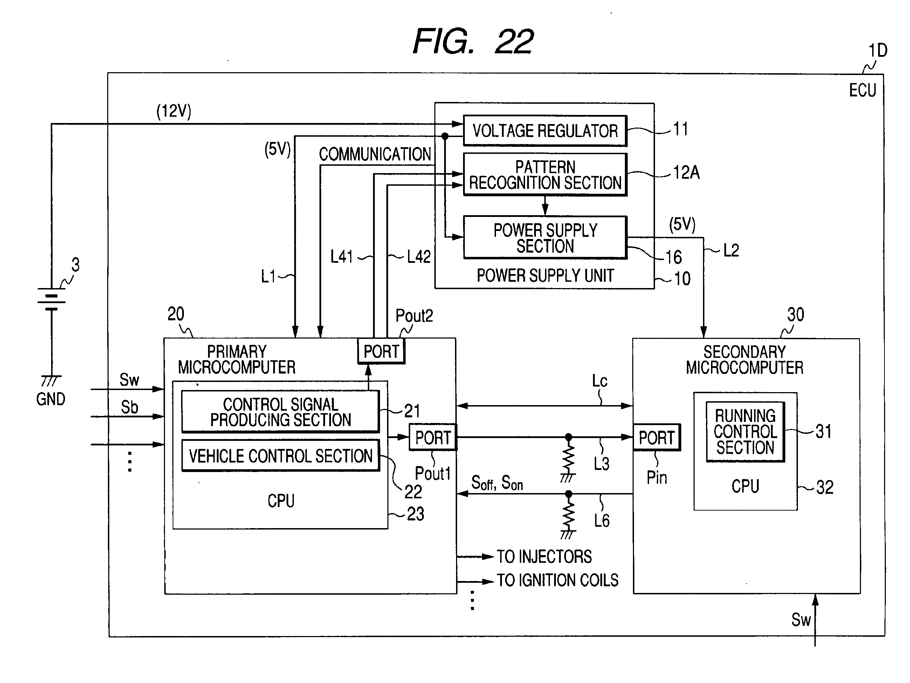

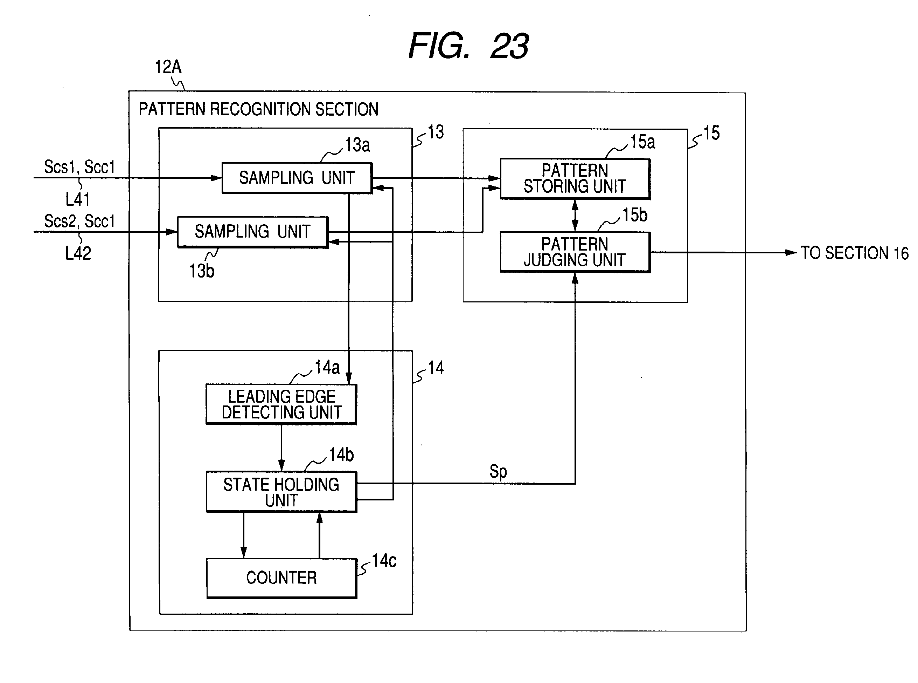

Fig. 22 is a block diagram of an ECU 1D according to the fifth embodiment, and Fig. 23 is a block diagram of a pattern recognition section 12A according to the fifth embodiment.

As shown in Fig. 22, an ECU 1D differs from the ECU 1 (see Fig. 5) in that the microcomputer 20 produces a first supply control signal Scs1 and a second supply control signal Scs2 as first and second power control signals Sc in response to the level change of the switch signal Sw to the high level, produces a first cutoff control signal Scc1 and a second cutoff control signal Scc2 as first and second power control signals Sc in response to the level change of the switch signal Sw to the low level, and simultaneously transmits the first and second power control signals to a pattern recognition section 12A of the supply unit 10 through respective signal lines L41 and L42. The microcomputer 20 may transmit the first and second power control signals every pattern period of time for a signal transmission period of time.

The first supply control signal Scs1 has the level varying with time in a first level pattern in the pattern period. The second supply control signal Scs2 has the level varying with time in a second level pattern in the pattern period. The first cutoff control signal Scc1 has the level changed with time in a third level pattern in the pattern period. The second cutoff control signal Scc2 has the level changed with time in a fourth level pattern in the pattern period. This pattern period is, for example, half of the pattern period of the power control signal according to the first embodiment. Therefore, although the amount of information in each of the first and second power control signals Sc is half of that in the power control signal Sc according to the first embodiment, the amount of information in the combination of the first and second power control signals Sc is the same as the amount of information in the power control signal Sc according to the first embodiment.

As shown in Fig. 23, the pattern recognition section 12A differs from the section 12 (see Fig. 6) in that the signal receiving block 13 has the sampling unit 13a for always monitoring the voltage level of the signal line L41 to detect levels of a line transmission signal as levels of bits of the first power control signal Scs1 or Scc1 transmitted through the signal line L41, and another sampling unit 13b for always monitoring the voltage level of the signal line L42 to detect levels of a line transmission signal as levels of bits of the second power control signal Scs2 or Scc2 transmitted through the signal line L42.

The detecting unit 14a of the judging block 14 detects a leading edge of the top bit in the first power control signal Scs1 or Scc1 every pattern period. In the same manner as in the first embodiment, the holding unit 14b of the judging block 14 instructs the sampling unit 13a to detect bit levels of the first power control signal Scs1 or Scc1 at the bit detecting timings every pattern period and instructs the sampling unit 13b to detect bit levels of the second power control signal Scs2 or Scc2 at the bit detecting timings every pattern period. The storing unit 15a of the judging block 15 stores the bit levels of the first power control signal Scs1 or Scc1 detected in the unit 13a and the bit levels of the second power control signal Scs2 or Scc2 detected in the unit 13b every pattern period. The judging unit 15b determines a first actual level pattern of the first power control signal Scs1 or Scc1 and a second actual level pattern of the second power control signal Scs1 or Scc1 from the bit levels of the signals stored in the unit 15a every reception of the pattern judging instruction Sp.

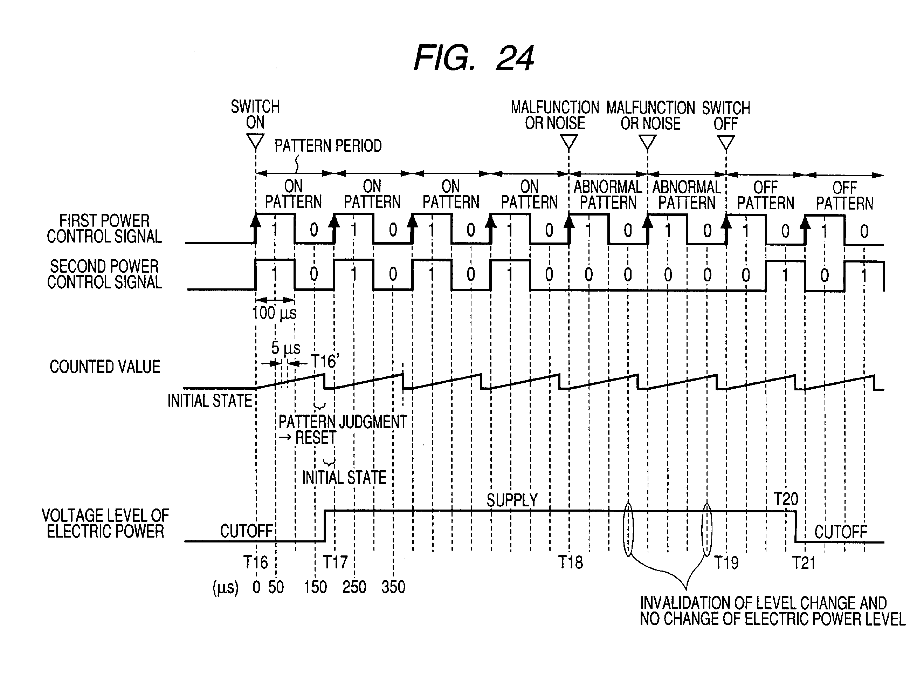

Fig. 24 is a timing chart of a first power control signal, a second power control signal, a counted value, and the voltage level of electric power supplied to the microcomputer 30. The first supply control signal Scs1 is, for example, formed in the first level pattern "10". The second supply control signal Sc2 is, for example, formed in the second level pattern "10". The first cutoff control signal Scc1 is, for example, formed in the third level pattern "10". The second cutoff control signal Scc2 is, for example, formed in the fourth level pattern "01".

As shown in Fig. 24, when the ignition switch continuously set in the high or low level, the signal lines L41 and L42 are, for example, set at the low level together, and the counted value of the counter 14c is set at zero. When the ignition switch is switched on at the time T16 to change the switch signal Sw to the high level (affirmative judgment at step S410 in Fig. 11), the microcomputer 20 repeatedly outputs a first supply control signal Scs1 and a second supply control signal Scs2 to the supply unit 10 through the signal lines L41 and L42 for a signal transmission period. After an elapse of this period, the microcomputer 20 fixes the signal lines L41 and L42 to the low level.

The sampling units 13a and 13b always monitor voltage levels of the signal lines L41 and L42 to detect power control signals Sc. When the detecting unit 14a detects a leading edge of a first power control signal Sc received in the receiving unit 13a at each of the times T16 and T17 , the holding unit 14b holds information of the pattern recognition state, and the counter 14c starts incrementing the counted value. The holding unit 14b determines bit detecting timings (e.g., 50 µ sec and 150 µ sec starting from the detection of the leading edge) from the counted value. Each of the sampling units 13a and 13b detects the bit levels of the received signal at the bit detecting timings. When the detection of the bit levels of the signal is completed, the holding unit 14b outputs a pattern judgment instruction Sp to the judging unit 15b and holds the initial state, and the counter 14c resets the counted value at zero at the time T16'.

The detection of the bit levels of the first power control signal Sc and the detection of the bit levels of the second power control signal Sc are simultaneously performed in the sampling units 13a and 13b. Therefore, because the amount of information in each of the control signals according to this embodiment is smaller than that in the control signal according to the first embodiment, the period of time required to detect the bits of the control signals simultaneously transmitted is shortened, as compared with the period of time required to detect the bit levels of one power control signal transmitted according to the first embodiment.

In response to the instruction Sp, the judging unit 15b determines a first actual level pattern "10" of the first power control signal Sc received from the sampling unit 13a and a second actual level pattern "10" of the second power control signal Sc received from the sampling unit 13b. Then, the judging unit 15b judges whether the first and second actual level patterns are, respectively, identical with first and second registered patterns (step S20 in Fig. 13). These registered patterns are, respectively, set to accord with the first and second level patterns of the first and second supply control signals Scs1 and Scs2. When the actual level patterns are identical with the registered patterns, the judging unit 15b recognizes the combination of the first and second power control signals Sc as a supply control signal. In response to this recognition, the power supplying section 16 starts supplying electric power to the microcomputer 30 at the time T16'.

Because the period of time required to receive all bits of the signals in the judging section 15 after the detection of the leading edge is shortened as compared with that in the first embodiment, the judging section 15 performs the pattern recognition in a shorter time after the detection of the leading edge. Therefore, the section 16 starts supplying the electric power in a shorter time after the switching-on of the ignition switch.

When the ignition switch is switched off (affirmative judgment at steps S110 and S210 in Fig. 8 and Fig. 9) at the time T19, the microcomputer 20 repeatedly outputs a first cutoff control signal and a second cutoff control signal to the supply unit 10 through the signal lines L41 and L42 for a signal transmission period. After an elapse of this period, the microcomputer 20 fixes the signal lines L41 and L42 to the low level.

When the detecting unit 14a detects a leading edge of a first power control signal Sc at each of the times T19 and T21, the counter 14c starts incrementing the counted value. The holding unit 14b determines bit detecting timings (e.g., 50 µ sec and 150 µ sec starting from the detection of the leading edge) from the counted value. Each of the sampling units 13a and 13b detects the bit levels of the signal at the bit detecting timings. When the detection of the bit levels of the signal is completed, the holding unit 14b outputs a pattern judgment instruction Sp to the judging unit 15b and holds the initial state, and the counter 14c resets the counted value at zero at the time T20.

In response to the instruction Sp, the judging unit 15b determines a first actual level pattern "10" of the first power control signal received from the sampling unit 13a and a second actual level pattern "01" of the second power control signal received from the sampling unit 13b. Then, the judging unit 15b judges whether the first and second actual level patterns are, respectively, identical with third and fourth registered patterns (step S22 in Fig. 13). These registered patterns are, respectively, set to accord with the third and fourth level patterns of the first and second cutoff control signals Scc1 and Scc2. When the actual level patterns are identical with the registered patterns, the judging unit 15b recognizes the combination of the first and second power control signals as a cutoff control signal. In response to this recognition, the power supplying section 16 cuts off electric power to the microcomputer 30 at the time T20.

In the same manner as the transmission of the first and second supply control signals, the judging section 15 performs the pattern recognition in a shorter time after the detection of the leading edge of the first cutoff control signal, so that the section 16 cuts off the electric power in a shorter time after the switching-off of the ignition switch.

In contrast, when the CPU 23 continuously sets the signal line L4 at the low level in response to the switch signal Sw maintained to the high or low level, the voltage level of the signal line L41 or L42 is sometimes set to the high level due to a malfunction of the microcomputer 20 or noise, or the supply unit 10 detects the high level of the signal line L41 or L42 by mistake due to a malfunction of the supply unit 10.

In this case, for example, although the voltage level of the second signal line L42 is maintained to the low level, the voltage level of the signal line L41 is distorted to the level pattern "1010" between the times T18 and T19 to form a repetition of the first or third level pattern "10". In response to this distortion, the judging unit 15b determines the actual level patterns "10" and "00" and recognizes the combination "1000" of the actual level patterns as an abnormal pattern (step S24 in Fig. 13). The power supplying section 16 disregards or invalidates this level change having the abnormal pattern. Therefore, the section 16 continues supplying or cutting off electric power to the microcomputer 30.

As described above, the amount of information in each of the first and second power control signals simultaneously transmitted through the signal lines L41 and L42 is smaller than the amount of information in one power control signal Sc according to the first embodiment. Therefore, the period of time required to transmit all bits of the first and second power control signals Sc from the microcomputer 20 to the supply unit 10 can be shortened as compared with the period of time according to the first embodiment.

Accordingly, the ECU 1D can start the operation of the microcomputer 30 in a shorter time to effectively operate the microcomputer 30. Further, the ECU 1D can stop the operation of the microcomputer 30 in a shorter time to reduce electric power consumed in the microcomputer 30.

Further, the supply unit 10 performs the pattern judgment and recognition for each of the first and second power control signals transmitted through the signal lines L41 and L42. Therefore, even when a malfunction of the microcomputer 20 or the supply unit 10 occurs or noise influences on the voltage level of the signal line L41 or L42, the supply unit 10 can further reliably detect the occurrence of the malfunction or noise. Accordingly, the ECU 1D can further reliably prevent the electric power from being consumed unnecessarily and the failure or breakdown of the microcomputer 30.

In this embodiment, the detecting unit 14a detects a leading edge of the first power control signal monitored in the sampling unit 13a. However, the detecting unit 14a may detect a leading edge of the second power control signal monitored in the sampling unit 13b.

Further, the number of power control signals transmitted from the microcomputer 20 to the supply unit 10 through respective signal lines may be three or more.

### SIXTH EMBODIMENT

In the first embodiment, the supply control signal and the cutoff control signal have different level patterns of the bits. However, the supply and cutoff control signals outputted from the microcomputer 20 may be analog pulse signals set at different frequencies, respectively. Because the frequencies of the supply and cutoff control signals are differentiated, the signals have different level patterns. Further, the supply unit 10 may receive voltage signals set at different voltage levels corresponding to the frequencies.

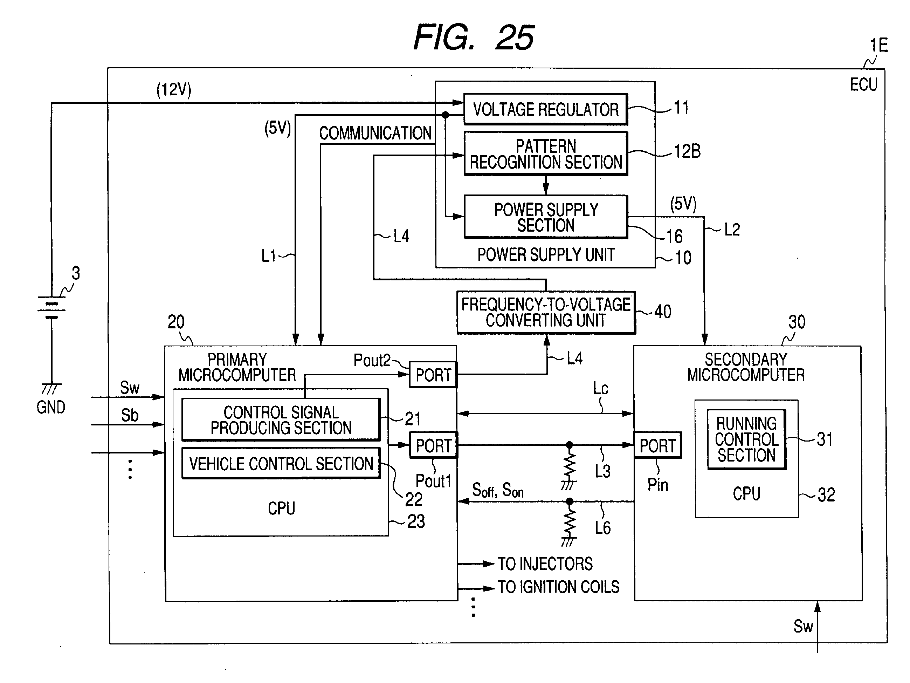

Fig. 25 is a block diagram of an ECU 1E according to the sixth embodiment.

As shown in Fig. 25, an ECU 1E has the microcomputer 20 for outputting a first pulse signal having a first frequency F1 as a supply control signal Sc1 for a first period of time in response to the level change of the switch signal Sw to the high level and outputting a second pulse signal having a second frequency F2 different from the frequency F1 as a cutoff control signal Sc2 for a second period of time in response to the level change of the switch signal Sw to the low level.

Further, the ECU 1E has a frequency-to-voltage converting unit 40 for producing an analog signal set at a voltage level corresponding to the frequency of a received pulse signal from the received pulse signal to convert the first pulse signal into a supply voltage signal having a first effective voltage level V1 corresponding to the frequency F1 for a first effective period of time Te1 or more and to convert the second pulse signal into a cutoff voltage signal having a second effective voltage level V2 corresponding to the frequency F2 for a second effective period of time Te2 or more.

The voltage level V1 is placed in a first voltage range from a first judging value Vj1 (e.g., 2.0V) to a value lower than a second judging value Vj2 (e.g., 2.5V). The voltage level V2 is placed in a second voltage range from the second judging value Vj 2 to a third judging value Vj3 (e.g., 3.0V). The voltage signal of the converting unit 40 is received in a pattern recognition section 12B of the supply unit 10.

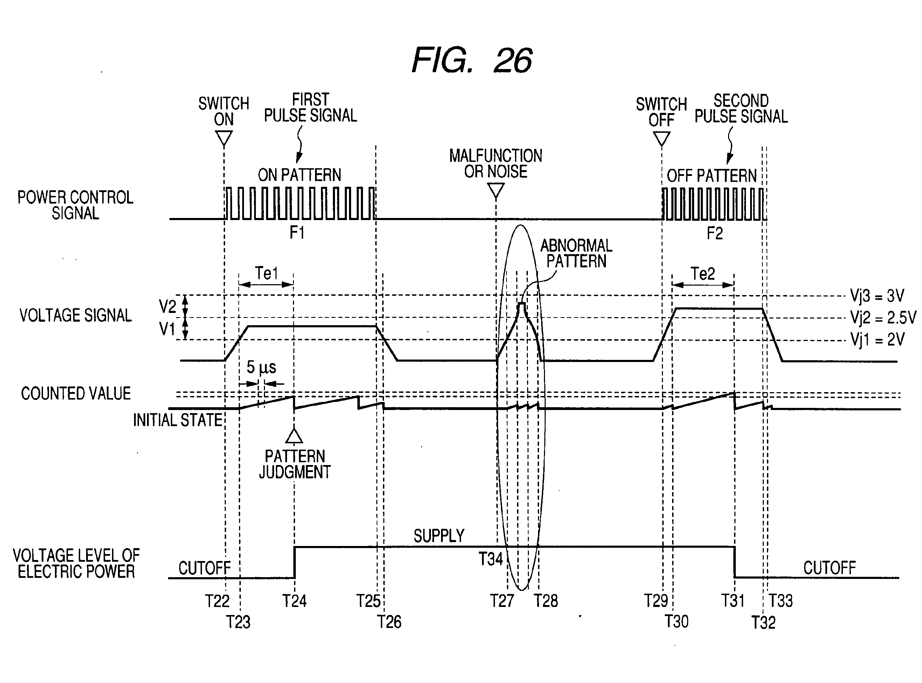

Fig. 26 is a timing chart of a power control signal, a voltage signal, a counted value and the voltage level of electric power supplied to the microcomputer 30 according to the sixth embodiment.

As shown in Fig. 26, when the switch signal Sw continues at the high or low level, the microcomputer 20 outputs no power control signal, so that the voltage level of the signal line L4 is set at zero. When the ignition switch is switched on, the microcomputer 20 starts outputting a first pulse signal as a supply control signal Sc1 at the time T22 and continues the outputting of the first pulse signal for a predetermined period of time. This predetermined period is set to be sufficiently longer than the first effective period of time Te1.

The converting unit 40 converts the first pulse signal into a supply voltage signal and transmits this voltage signal to the supply unit 10 through the line L4. The voltage level of the voltage signal starts increasing at the time T22 and exceeds the first judging value Vj1 after the time T23. Then, the signal level is placed within the first voltage range. Then, the signal level starts decreasing at the time T25 and becomes lower than the first judging value Vj1 after the time T26.

When the continuation time of the voltage signal placed within the first voltage range reaches the first effective period of time Te1 at the time T24, the pattern recognition section 12B of the supply unit 10 judges that the level pattern of the received voltage signal is identical with that of the supply voltage signal, so that the section 12B recognizes the voltage signal as a supply control signal. Therefore, in response to this recognition, the power supplying section 16 starts supplying electric power to the microcomputer 30 at the time T24.

In response to the level change of the switch signal Sw to the low level, the microcomputer 20 starts outputting a second pulse signal as a cutoff control signal at the time T29 and continues outputting the second pulse signal for a predetermined period of time. This predetermined period is set to be sufficiently longer than the second effective period of time Te2. The converting unit 40 converts the second pulse signal into a cutoff voltage signal and transmits this voltage signal to the supply unit 10 through the line L4. Therefore, the voltage level of the voltage signal starts increasing at the time T29 and exceeds the second judging value Vj2 after the time T30. Then, the signal level is placed within the second voltage range. Then, the second level starts decreasing at the time T32 and becomes lower than the second judging value Vj2 after the time T33.

When the continuation time of the voltage signal placed within the second voltage range reaches the second effective period of time Te2 at the time T31, the pattern recognition section 12B judges that the level pattern of the received voltage signal is identical with that of the cutoff voltage signal, so that the section 12B recognizes the voltage signal as a cutoff control signal Sc2. Therefore, in response to this recognition, the power supplying section 16 cuts off electric power to the microcomputer 30 at the time T31.

In contrast, in the case of the malfunction of the microcomputer 20 or the supply unit 10 or the noise at the time T34, the pattern recognition section 12B sometimes detects that the voltage level of the line L4 is heightened between the times T27 and T28 and is placed within the first or second voltage range. However, the continuation time of the malfunction or the noise is considerably shorter than the first and second effective periods Te1 and Te2. Therefore, the pattern recognition section 12B judges that the level pattern at the line L4 differs from those of the supply and cutoff voltage signals, so that the section 12B recognizes the level pattern as an abnormal pattern. Therefore, the power supplying section 16 disregards or invalidates this level change to maintain the supply or cutoff of electric power to the microcomputer 30.

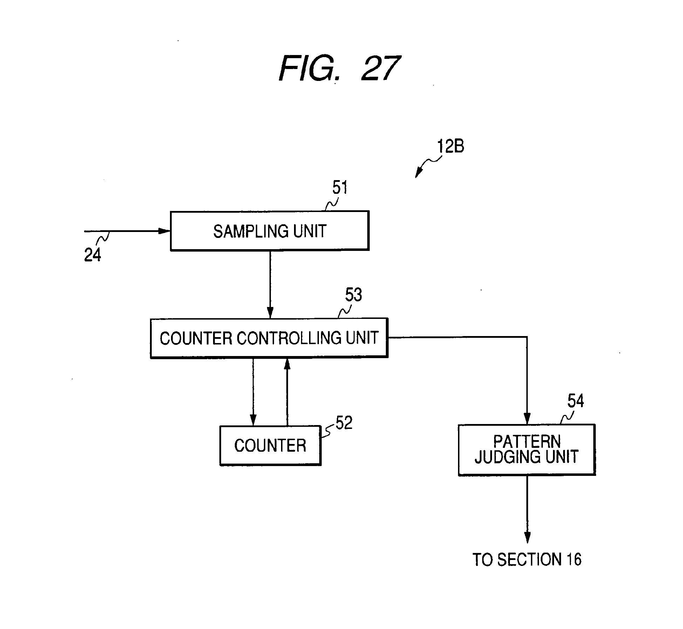

Fig. 27 is a block diagram of the pattern recognition section 12B according to the sixth embodiment.

As shown in Fig. 27, the section 12B has a sampling unit 51, a counter 52, a counter controlling unit 53, and a pattern judging unit 54.

The sampling unit 51 always monitors the voltage level of the line L4 to measure the voltage level of a voltage signal received from the converting unit 40 while detecting the increase or decrease of the voltage level. For example, the sampling unit 51 temporarily stores, in a memory, a first voltage level previously measured, and detects the increase or decrease of the voltage level by comparing the first voltage level with a second voltage level currently measured.

The counter 52 increments a counted value every 5 µ sec. A first upper limit of the counted value corresponds to the first effective period Te1. A second upper limit of the counted value corresponds to the second effective period Te2.

The counter controlling unit 53 controls the counter 52 , in response to the measurement of the voltage level increased to the first judging value Vj 1, to start incrementing the counted value, controls the counter 52, in response to the measurement of the voltage level increased to the second judging value Vj2, to reset the counted value at zero and to restart incrementing the counted value, controls the counter 52, in response to the measurement of the voltage level decreased to be lower than the first judging value Vj1, to reset the counted value at zero, controls the counter 52, in response to both the first upper limit of the counted value and the measurement of the voltage level lower than the second judging value Vj2, to reset the counted value at zero, and controls the counter 52, in response to both the second upper limit of the counted value and the measurement of the voltage level equal to or higher than the second judging value Vj2.

The pattern judging unit 54 judges, in response to both the first upper limit of the counted value and the measurement of the voltage level lower than the second judging value Vj2, that the level pattern of the received voltage signal is identical with the level pattern of the supply voltage signal, judges, in response to both the second upper limit of the counted value and the measurement of the voltage level equal to or higher than the second judging value Vj2, that the level pattern of the received voltage signal is identical with the level pattern of the cutoff voltage signal, and judges, in response to the measurement of the voltage level decreased to be lower than the first judging value Vj 1, that the level pattern of the received voltage signal differs from the level patterns of the supply and cutoff voltage signals and is an abnormal pattern.

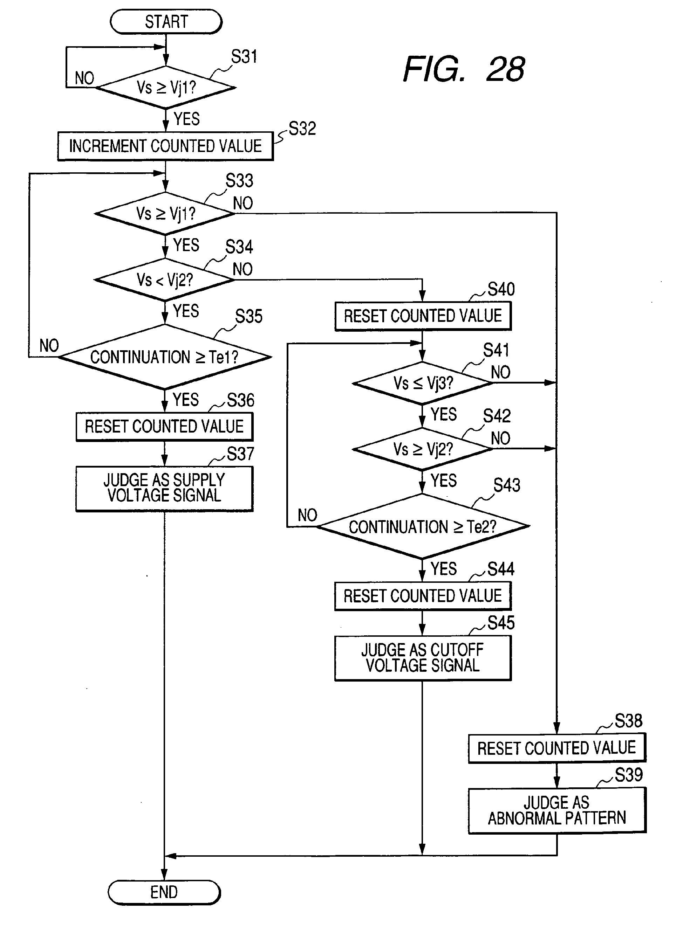

The pattern judgment and recognition of the ECU 1E will be described in more detail with reference to Fig. 27 and Fig. 28. Fig. 28 is a flow chart of the pattern judgment and recognition performed in the pattern recognition section 12B.

As shown in Fig. 27 and Fig. 28, at step S31, the pattern recognition section 12B judges whether or not the voltage level Vs of the line L4 is equal to or higher than the first judging value Vj1. In the case of the negative judgment, the procedure returns to step S31. In contrast, in the case of the affirmative judgment, the section 12B assumes that a voltage signal is received. Therefore, at step S32, the controlling unit 53 controls the counter 52 to start incrementing the counted value.

Then, at step S33, the section 12B judges whether or not the voltage level Vs of the received voltage signal is still equal to or higher than the first judging value Vj1. In the case of the affirmative judgment, at step S34, the section 12B judges whether or not the voltage level Vs is lower than the second judging value Vj2. In the case of the affirmative judgment, the section 12B assumes that a supply voltage signal having the effective voltage level V1 is received.

Then, at step S35, the section 12B judges based on the counted value whether or not the continuation time of the voltage level Vs being equal to or higher than the value Vj1 and being lower than the value Vj2 is equal to or longer than the first effective period Te1. A first upper limit of the counted value corresponds to the first effective period Te1. In the case of the negative judgment, the section 12B acknowledges that the continuation time of the voltage level V1 is not yet sufficient to finally judge the received signal as a supply voltage signal. Therefore, the procedure returns to step S33. In contrast, in the case of the affirmative judgment, the section 12B acknowledges that the continuation time of the voltage level V1 is sufficient to judge the received signal as a supply voltage signal. Therefore, at step S36, the controlling unit 53 controls the counter 52 to reset the counted value at zero. Then, at step S37, the judging unit 54 judges that the level pattern of the received voltage signal is identical with the level pattern of the supply voltage signal. Therefore, the section 12B recognizes the reception of a supply control signal Sc1, and the power supplying section 16 starts supplying electric power to the microcomputer 30.

In contrast, in the case of the negative judgment at step S33, the section 12B acknowledges that the continuation time of the voltage level V1 is insufficient. Therefore, at step S38, the controlling unit 53 controls the counter 52 to reset the counted value at zero. Then, at step S39, the judging unit 54 judges that the level pattern of the received voltage signal differs from the level patterns of the supply and cutoff voltage signals and is an abnormal pattern. Therefore, the power supplying section 16 disregards or invalidates the received voltage change to maintain the supply or cutoff of electric power to the microcomputer 30.

Further, in the case of the negative judgment at step S34, the section 12B realizes the reception of no supply voltage signal. Therefore, at step S40, the controlling unit 53 controls the counter 52 to reset the counted value at zero and to restart incrementing the counted value. Then, at step S41, the section 12B judges whether or not the voltage level Vs is equal to or lower than the third judging value Vj3. In the case of the affirmative judgment, at step S42, the section 12B judges whether or not the voltage level Vs is equal to or higher than the second judging value Vj 2. In the case of the affirmative judgment, the section 12B assumes that a cutoff voltage signal having the effective voltage level V2 is received.

Then, at step S43, the section 12B judges based on the counted value whether or not the continuation time of the voltage level Vs being ranged between the values Vj 2 and Vj 3 is equal to or longer than the second effective period Te2. A second upper limit of the counted value corresponds to the second effective period Te2. In the case of the negative judgment, the section 12B acknowledges that the continuation time of the voltage level V2 is not yet sufficient to finally judge the received signal as a cutoff voltage signal. Therefore, the procedure returns to step S41. In contrast, in the case of the affirmative judgment, the section 12B acknowledges that the continuation time of the voltage level V2 is sufficient to judge the received signal as a cutoff voltage signal. Therefore, at step S44, the controlling unit 53 controls the counter 52 to reset the counted value at zero. Then, at step S45, the judging unit 54 judges that the level pattern of the received voltage signal is identical with the level pattern of the cutoff voltage signal. Therefore, the section 12B recognizes the reception of a cutoff control signal, and the power supplying section 16 cuts off electric power to the microcomputer 30.

In contrast, in the case of the negative judgment at step S41, the section 12B acknowledges that the received voltage level exceeds the voltage level V2. Therefore, the procedure proceeds to steps S38 and S39. Further, in the case of the negative judgment at step S42, the section 12B realizes the reception of no cutoff voltage signal. Therefore, the procedure proceeds to steps S38 and S39.

This pattern judgment and recognition is repeatedly performed. Therefore, as shown in Fig. 26, because the continuation time of the first pulse signal is longer than the first effective period Te1, this pattern judgment is repeated three times when the section 12B actually receives a supply control signal. In this case, the section 12B finally performs the negative judgment at step S33 in the final pattern judgment and recognizes the received level pattern as an abnormal pattern. However, the section 16 has already supplied electric power to the microcomputer 30, the section 16 continues the supply of the electric power in response to the judgment of this pattern being an abnormal pattern. In the same manner, even when the section 12B actually receiving a cutoff control signal Sc2 finally judges the received level pattern of the cutoff voltage signal as an abnormal pattern, the section 16 continues the cutoff of the electric power in response to the judgment as an abnormal pattern.

As described above, the level pattern of the supply voltage signal is expressed by both the first effective voltage level V1 and the continuation time of the level V1 equal to the first effective period Te1, and the level pattern of the cutoff voltage signal is expressed by both the second effective voltage level V2 and the continuation time of the level V2 equal to the second effective period Te2. Further, the levels V1 and V2 of the voltage signals differ from the supply voltage (e.g. , 5V) of electric power supplied from the supply unit 10 to the microcomputers 20 and 30.

Therefore, unless the microcomputer 20 actually outputs a pulse signal, the voltage level V1 or V2 is not normally detected in the ECU 1E. Further, the voltage level V1 or V2 continued for the effective period Te1 or Te2 is hardly detected in the ECU 1E. In this case, even when an abnormal voltage signal derived from the noise or the malfunction is inputted to the supply unit 10, the level pattern of the abnormal voltage signal is differentiated from the level patterns of the supply and cutoff voltage signals at a high probability.

Accordingly, the ECU 1E can further reliably prevent noise or a malfunction of the supply unit 10 or the microcomputer 20 from causing an undesired change from the power supply to the power cutoff or an undesired change from the power cutoff to the power supply.

These embodiments should not be construed as limiting the present invention to structures of those embodiments, and the ECU according to this invention may have the structure obtained by combining the embodiments and the prior art. For example, in the sixth embodiment, the microcomputer 20 may have the failure detecting unit 24 (see Fig. 16). In this case, in the same manner as in the second embodiment, the microcomputer 20 can detect a failure occurring in the ECU 1E from a monitoring signal transmitted through the signal line L5.

Further, in the same manner as in the third embodiment, the microcomputer 20 may have the PWM unit 26 (see Fig. 18) for producing a first pulse signal set at a first duty ratio and a second pulse signal set at a second duty ratio. The converting unit 40 converts the first pulse signal of the PWM unit 26 into a supply voltage signal and converts the second pulse signal of the PWM unit 26 into a cutoff voltage signal.

Moreover, the ECU 1E may have a plurality of frequency-to-voltage converting units 40 for converting a plurality of pulse signals outputted from the microcomputer 20 through a plurality of signal lines L4 in parallel to each other into a plurality of voltage signals and simultaneously outputting the voltage signals to a plurality of sampling units 51 of the supply unit 10 through a plurality of other signal lines L4, respectively. In this case, the supply unit 10 can further reliably detect a supply or cutoff voltage signal.

In the first to sixth embodiments, the pattern judgment of the power control signal in the section 12 is always performed. However, the pattern judgment may be performed only in response to the level change of the switch signal Sw to the high or low level. In other words, the microcomputer may output only the supply control signal without outputting any cutoff control signal or may output only the cutoff control signal without outputting any supply control signal.

Further, the ECU mounted on a vehicle represents an electronic control system in these embodiments. However, the present invention may be applied to any electronic control system for controlling machine tools or the like having no relation with a vehicle by using a primary controller and a secondary controller receiving electric power from a power supply unit.

## Claims

1. An electronic control unit, comprising:
a primary controller that produces a power control signal;
a secondary controller; and
a power supply unit that supplies or cuts off electric power to the secondary controller when receiving the power control signal from the primary controller,
wherein the primary controller produces the power control signal, of which a level is changed with time in a specific level pattern, and transmits the power control signal to the power supply unit through a signal line,
and wherein the power supplyunit holds a registered level pattern denoting a level changed with time, detects a line transmission signal from the signal line, judges whether or not a level pattern of the line transmission signal matches with the registered level pattern, and starts supplying the electric power to the secondary controller or cuts off the electric power supplied to the secondary controller in response to the level pattern of the line transmission signal matching with the registered level pattern.

2. The electronic control unit according to claim 1, wherein the primary controller has a pulse producing unit for producing a pulse signal set at a specific duty ratio as the power control signal having the specific level pattern, and the power supply unit judges that a level pattern of the line transmission signal detected as a level pattern of the pulse signal matches with the registered level pattern.

3. The electronic control unit according to claim 1, wherein
the primary controller produces a plurality of power control signals, each of which has a level changed with time in a specific level pattern, and transmits the power control signals to the power supply unit through respective signal lines, and
the power supply unit holds a plurality of registered level patterns each of which denotes a level changed with time and corresponds to one signal line, detects a level of a line transmission signal from each signal line as a level of the corresponding power control signal, judges whether or not a level pattern of each line transmission signal matches with the corresponding registered level pattern, and starts supplying the electric power to the secondary controller or cuts off the electric power supplied to the secondary controller when the respectively voltage level patterns of the line transmission signals, respectively, match with the registered level patterns.

4. The electronic control unit according to claim 1,
wherein the primary controller produces the power control signal which has a plurality of constant levels formed in the specific level pattern in respective equal unit periods of time during a pattern period of time, and the power supply unit detects the level of the line transmission signal at each of a plurality of detection timings, which are set at equal intervals of time equal to the unit period during the pattern period of time, as one level of the power control signal.

5. The electronic control unit according to claim 4,
wherein the power supply unit has a signal detecting unit for detecting a change in the level of the line transmission signal as a top portion of the power control signal, a counter for performing a counting operation in response to the detection of the change in the level of the line transmission signal to increment a counted value, and a timing determining unit for determining the detection timings from a plurality of specific counted values of the counter differentiated from one another by a constant value corresponding to the unit period, instructing the signal detecting unit to detect the levels of the line transmission signal at the detection timings, and instructing the counter to reset a counted value in response to the detection of the final level of the line transmission signal at the final detection timing.

6. The electronic control unit according to claim 4,
wherein the power supply unit detects each level of the line transmission signal substantially at a mid point of time in the corresponding unit period.

7. The electronic control unit according to claim 1,
wherein the primary controller outputs a voltage signal having the specific level pattern, which is indicated by both a specific voltage level of the voltage signal and a specific continuation time of the voltage signal, to the power supply unit through the signal line as the power control signal, and the power supply unit holds a registered voltage level and a registered continuation time, judges whether or not the detected voltage level of the line transmission signal is equal to the registered voltage level for the registered continuation time and starts supplying or cuts off the electric power to the secondary controller in response to the voltage level of the signal line being equal to the registered voltage level for the registered continuation time.

8. The electronic control unit according to claim 7,
wherein the specific voltage level of the voltage signal is differentiated from a voltage level of the electric power supplied to the secondary controller.

9. The electronic control unit according to claim 7, further comprising a converting unit for receiving a pulse signal set at a frequency from the primary controller as the power control signal, converting the pulse signal into a voltage signal set at a voltage level corresponding to the frequency of the pulse signal and outputting the voltage signal to the power supply unit through the signal line during the reception of the pulse signal,
wherein the primary controller produces and outputs a pulse signal set at a specific frequency as the power control signal for the specific continuation time or more to induce the converting unit to convert the pulse signal into the voltage signal set at the specific voltage level corresponding to the specific frequency and to output the voltage signal to the power supply unit for the specific continuation time or more.

10. The electronic control unit according to claim 7, wherein
the primary controller produces a plurality of voltage signals, each of which is formed in a specific level pattern indicated by both a specific voltage level and a specific continuation time of the voltage signal, and transmits the voltage signals to the power supply unit through respective signal lines as the power control signals, and
the power supply unit holds a plurality of combinations of registered voltage levels and registered continuation times each of which corresponds to one signal line, detects a voltage level of a line transmission signal from each signal line as a voltage level of the corresponding voltage signal, judges whether or not the voltage level of each line transmission signal satisfies both the corresponding registered voltage level and the corresponding registered continuation time and starts supplying or cuts off the electric power to the secondary controller when the voltage level of each line transmission signal satisfies both the registered voltage level and the registered continuation time.

11. The electronic control unit according to claim 1, wherein the primary controller has a failure detecting unit for judging whether or not the power supply unit supplies or cuts off the electric power to the secondary controller when the primary controller outputs the power control signal set at the specific level pattern matching with the registered level pattern to the power supply unit, and detecting a failure when the power supply unit does not supply or cut off the electric power to the secondary controller.

12. The electronic control unit according to claim 1, wherein the power control signal formed in the specific level pattern has a plurality of first portions set at a first voltage level and a plurality of second portions set at a second voltage level different from the first voltage level.

13. The electronic control unit according to claim 1, wherein the primary controller maintains the signal line at a first level in response to a switch signal set in a first level, outputs a supply control signal having a first specific pattern to the power control unit through the signal line as the power control signal in response to a change of the switch signal from the first level to a second level, maintains the signal line at the first level or a second level in response to the switch signal set in the second level, and outputs a cutoff control signal having a second specific pattern to the power control unit through the signal line as the power control signal in response to a change of the switch signal from the second level to the first level,
and wherein the power control unit holds a first registered pattern and a second registered pattern each of which denotes a level changed with time, starts supplying the electric power to the secondary controller in response to the level pattern of the line transmission signal matching with the first registered pattern, and cuts off the electric power supplied to the secondary controller in response to the level pattern of the line transmission signal matching with the second registered pattern.

14. The electronic control unit according to claim 13, wherein each of the supply and cutoff control signals has a plurality of first portions set at a high level and a plurality of second portions set at a low level.
